# FASCICULE DE BREVET EUROPEEN

(11) **EP 4 166 836 B1**
(45) Date de publication et mention de la délivrance du brevet: **17.07.2024**
(21) Numéro de dépôt: 22201166.0
(22) Date de dépôt: 12.10.2022
(51) Int. Cl.: F16L 37/34, F16L 37/35

(54) **RACCORD RAPIDE ET ENSEMBLE DE CONNEXION COMPRENANT UN TEL RACCORD RAPIDE**
SCHNELLKUPPLUNG UND VERBINDUNGSANORDNUNG MIT EINER SOLCHEN SCHNELLKUPPLUNG
QUICK CONNECTOR AND CONNECTION ASSEMBLY COMPRISING SUCH A QUICK CONNECTOR

(30) Priorité: 13.10.2021 FR 2110833
(43) Date de publication de la demande: 19.04.2023
(73) Titulaire: Staubli Faverges, 74210 Faverges-Seythenex (FR)
(72) Inventeur: DURIEUX, Christophe, 73200 GILLY SUR ISERE (FR); MARQUES BARROCA, Serafim, 73200 ALBERTVILLE (FR)
(74) Mandataire: Lavoix

(56) Documents cités:
- SE-A1- 2 050 441
- US-A1- 2013 312 846
- US-A1- 2019 093 809

## Description

La présente invention concerne un raccord rapide pour la jonction amovible de deux canalisations parcourues par un fluide sous pression.

Le domaine de l'invention est celui des raccords fluidiques. Dans ce domaine, il est connu d'utiliser un raccord rapide comprenant un élément mâle et un élément femelle raccordés chacun à une canalisation et aptes à s'emmancher l'un dans l'autre.

FR-A-3084437 enseigne de prévoir des joints d'étanchéité à l'interface entre un clapet et un corps tubulaire d'un élément mâle de raccord et/ou à l'interface entre un tiroir et un poussoir ou un corps tubulaire de l'élément femelle du même raccord.

Il est également connu de EP-A-2818781 de monter un joint torique sur un clapet d'un élément mâle de raccord, ce joint torique venant en appui contre un siège, alors qu'un joint monté sur un tiroir de l'élément femelle est en appui contre un siège arrière d'un poussoir en position avancée de ce tiroir.

US-A-2013/312846 divulgue, quant à lui, un raccord rapide dont les éléments mâle et femelle sont pourvus de joints d'étanchéité. D'autre part, US-A-2019/093809 divulgue un raccord rapide dont les éléments mâle et femelle sont équipés de poussoirs centraux.

Ces raccords rapides donnent globalement satisfaction.

Toutefois, il existe un risque que des volumes situés à l'interstice entre des parties mobiles des éléments mâle et femelle se remplissent de fluide, en configuration accouplée du raccord rapide ou lors d'une phase de déconnexion, notamment au niveau des faces avant des éléments mâle et femelle. Ceci peut provoquer des phénomènes d'égoutture en fin de déconnexion. De tels phénomènes d'égoutture, qui résultent notamment des variations dimensionnelles des pièces constitutives du raccord rapide dues aux tolérances de fabrication de ces pièces, sont rédhibitoires pour certaines applications, notamment dans les domaines alimentaire et électronique. Ils participent également à une possible pollution de l'environnement du raccord qu'il devient alors nécessaire de décontaminer régulièrement.

C'est à ces problèmes qu'entend particulièrement remédier l'invention en proposant un nouveau raccord rapide pour la jonction amovible de deux canalisations parcourues par un fluide sous pression dans lequel les risques d'égoutture sont minimisés.

A cet effet, l'invention concerne un raccord rapide pour la jonction amovible de deux canalisations parcourues par un fluide sous pression, ce raccord rapide comprenant un élément male et un élément femelle aptes à s'emmancher selon un axe d'emmanchement, entre une configuration désaccouplée et une configuration accouplée du raccord rapide.
L'élément mâle comprend
   ∘ un corps tubulaire mâle qui s'étend, selon un premier axe longitudinal, entre une extrémité proximale et une extrémité distale et qui présente
      ▪ une première cavité longitudinale de passage de fluide sous pression en configuration accouplée du raccord rapide,
      ▪ un premier plan de bord ménagé sur l'extérieur de l'extrémité distale du corps tubulaire mâle et perpendiculaire au premier axe longitudinal ;
   ∘ une première embouchure distale définie par l'extrémité distale du corps tubulaire mâle et dont un diamètre est inférieur à un diamètre de la première cavité longitudinale ;
   ∘ un clapet mobile, le long du premier axe longitudinal, entre une position avancée, où il obture la première embouchure distale, et une position reculée, où il n'obture pas la première embouchure distale ;
   ∘ un premier joint d'étanchéité.
L'élément femelle comprend
   ∘ un corps tubulaire femelle qui s'étend, selon un deuxième axe longitudinal, entre une extrémité proximale et une extrémité distale et qui comprend
      ▪ une deuxième cavité longitudinale de passage de fluide sous pression en configuration accouplée du raccord rapide,
   ∘ une deuxième embouchure distale dont un diamètre) est inférieur à un diamètre de la deuxième cavité longitudinale ;
   ∘ un poussoir apte à repousser le clapet mobile de sa position avancée vers sa position reculée le long du premier axe longitudinal ;
   ∘ un tiroir
      ▪ monté autour du poussoir,
      ▪ mobile, le long du deuxième axe longitudinal, entre une position avancée, où il obture la deuxième embouchure distale, et une position reculée, où il n'obture pas la deuxième embouchure distale et
      ▪ qui présente un deuxième plan de bord, ménagé sur l'extérieur d'une extrémité distale du tiroir et perpendiculaire au deuxième axe longitudinal ;
   ∘ un deuxième joint d'étanchéité logé partiellement dans une gorge du tiroir et qui prend appui sur une paroi du poussoir lorsque le tiroir est en position avancée.
Le premier joint d'étanchéité prend appui sur une surface cylindrique du clapet mobile, selon une direction radiale au premier axe longitudinal, lorsque ce clapet mobile est en position avancée. En outre, le deuxième joint d'étanchéité comprend une deuxième surface frontale qui est plus avancée que le deuxième plan de bord, le long du deuxième axe longitudinal.
Conformément à l'invention,
   - le premier joint d'étanchéité est logé partiellement dans une gorge du corps tubulaire mâle;
   - lorsque le tiroir est en position avancée, le deuxième joint d'étanchéité prend appui sur une paroi cylindrique du poussoir selon une direction radiale au deuxième axe longitudinal ;
   - le premier joint d'étanchéité comprend une première surface frontale qui est plus avancée que le premier plan de bord, le long du premier axe longitudinal ; et
   - les première et deuxième surfaces frontales des premiers et deuxième joints d'étanchéité sont aptes à venir en contact l'une contre l'autre à l'emmanchement des éléments mâle et femelle du raccord rapide.

Grâce à l'invention, les premières et deuxièmes surfaces frontales des premiers et deuxièmes joints d'étanchéité viennent en contact en premier, lors de l'accouplement des éléments mâles et femelles du raccord rapide, et se séparent en dernier, lors du désaccouplement. Les premiers et deuxièmes joints d'étanchéité assurent ainsi une fonction d'étanchéité pérenne, en particulier autour des faces avant des éléments mâles et femelles du raccord rapide, y compris en tenant compte de possibles variations dimensionnelles des éléments constitutifs des raccords.

Selon des aspects avantageux mais non-obligatoires de l'invention, un tel raccord rapide peut incorporer une ou plusieurs des caractéristiques suivantes prises selon toute combinaison technique admissible :
- lorsque le clapet est en position avancée, le premier joint d'étanchéité occupe un volume annulaire défini, radialement au premier axe longitudinal, entre le corps tubulaire mâle et le clapet et, axialement le long du premier axe longitudinal, en avant de la gorge du corps tubulaire mâle et en arrière du premier plan de bord et/ou lorsque le tiroir est en position avancée, le second joint d'étanchéité occupe un volume annulaire défini, radialement au deuxième axe longitudinal, entre le poussoir et l'extrémité distale du tiroir et, axialement le long du deuxième axe longitudinal, en avant de la gorge du tiroir et en arrière du deuxième plan de bord ;
- le clapet a une face avant tournée à l'opposé de la première cavité et disposée, axialement le long du premier axe longitudinal, en avant de la première surface frontale en position avancée du clapet et/ou le poussoir a une face avant tournée à l'opposé de la deuxième cavité et disposée, axialement le long du deuxième axe longitudinal, en avant de la deuxième surface frontale en position avancée du tiroir ;
- le premier joint d'étanchéité comprend un premier talon de blocage dans la gorge du corps tubulaire mâle, ce premier talon étant délimité par une première surface de contact avec la gorge du corps tubulaire mâle, une première surface interne prévue pour prendre appui contre la paroi cylindrique du clapet et un bourrelet dont un diamètre non contraint est inférieur à un diamètre extérieur du clapet et qui est délimité par la première surface interne; et/ou le deuxième joint d'étanchéité comprend un deuxième talon de blocage dans la gorge du tiroir, ce deuxième talon étant délimité par une deuxième surface de contact avec la cette gorge du tiroir, une deuxième surface interne prévue pour prendre appui contre la paroi cylindrique du poussoir et un bourrelet dont un diamètre non contraint est inférieur à un diamètre ;
- le premier joint d'étanchéité comprend une première surface arrière qui est tournée vers la première cavité longitudinale, qui relie la première surface de contact avec la première surface interne et qui est de forme concave et/ou le deuxième joint d'étanchéité comprend une deuxième surface arrière qui est tournée vers la deuxième cavité longitudinale, qui relie la deuxième surface de contact avec la deuxième surface interne et qui est de forme concave ;
- la première surface arrière délimite une première rainure qui est ouverte sur la première cavité longitudinale en position avancée du clapet et dont un diamètre maximum est supérieur à un diamètre minimum de la première surface de contact et/ou la deuxième surface arrière délimite une deuxième rainure qui est ouverte sur la deuxième cavité longitudinale en position avancée du clapet et dont un diamètre maximum est supérieur à un diamètre minimum de la deuxième surface de contact ;
- en arrière de la gorge, le corps tubulaire mâle a un diamètre interne supérieur à un diamètre maximum de la première surface arrière ;
- l'élément mâle comprend une bague rapportée dans le corps tubulaire mâle, configurée pour former un siège d'appui du clapet en position avancée et dont un diamètre interne est inférieur à un diamètre maximum de la première surface arrière ;
- l'élément mâle comprend un premier organe de rappel élastique configuré pour rappeler le clapet en position avancée et l'élément femelle comprend un deuxième organe de rappel élastique configuré pour rappeler le tiroir en position avancée ;
- le tiroir est formé d'une partie avant, qui comprend la gorge où est partiellement logé le deuxième joint d'étanchéité, et d'une partie arrière rapportée sur la partie avant, qui comprend une surface d'appui proximale pour le deuxième organe de rappel élastique et dont un diamètre intérieur est inférieur un diamètre minimum de la deuxième surface de contact ;
- le tiroir porte un troisième joint d'étanchéité en contact avec le corps tubulaire femelle, en position avancée et en position reculée du tiroir ;
- en configuration accouplée du raccord rapide, la première surface frontale est en appui axial, parallèlement à l'axe d'emmanchement, contre la deuxième surface frontale ;
- lorsque le clapet est en position avancée, la première surface frontale est située, le long du premier axe longitudinal, entre le premier plan de bord et un premier plan parallèle au premier plan de bord, perpendiculaire au premier axe longitudinal et passant par la face avant du clapet, et lorsque le clapet est en position avancée, le premier plan de bord et le premier plan parallèle sont séparés par une distance inférieure ou égale à 1 mm le long de cet axe et/ou lorsque le tiroir est en position avancée, la deuxième surface frontale est située, le long du deuxième axe longitudinal X6, entre le deuxième plan de bord et un deuxième plan parallèle au premier plan de bord, perpendiculaire au deuxième axe longitudinal et passant par la face avant du poussoir, et lorsque le tiroir est en position avancée, le deuxième plan de bord et le deuxième plan parallèle sont séparés par une distance inférieure ou égale à 1 mm le long de cet axe ;
- en configuration accouplée du raccord rapide, le poussoir maintient le clapet en position reculée, le fluide sous pression est libre de s'écouler entre les première et deuxième cavités longitudinales et l'extrémité distale du corps tubulaire mâle et une face avant du tiroir sont écartées l'une de l'autre, le long de l'axe d'emmanchement, d'une distance non nulle ;
- le premier joint d'étanchéité et le deuxième joint d'étanchéité sont identiques ;
- l'élément femelle comprend au moins deux surfaces de portée centrées sur le deuxième axe longitudinal, les surfaces de portée sont configurées pour guider l'élément mâle en cours d'emmanchement et les surfaces de portée ont un diamètre de guidage commun et sont décalées, le long du deuxième axe longitudinal, d'une distance supérieure ou égale à un cinquième du diamètre de guidage commun.

Selon un autre aspect, l'invention concerne un ensemble de connexion d'une plaque de raccordement mobile à au moins une plaque de raccordement fixe, notamment pour raccorder des circuits de type hydraulique. Conformément à l'invention,
- l'ensemble de connexion comprend au moins un raccord rapide selon l'une des revendications précédentes ;
- l'élément mâle du raccord rapide et l'élément femelle du raccord rapide sont chacun montés sur une des plaques mobile et fixe, laquelle est traversée par une canalisation reliée fluidiquement à la première ou à la deuxième cavité longitudinale de l'élément de raccord ; et
- une première plaque, parmi la plaque mobile et la plaque fixe, est équipée d'une bride de retenue de l'élément mâle ou femelle monté sur cette première plaque, cette bride de retenue permettant un mouvement de l'élément mâle ou femelle par rapport à la première plaque, dans un plan normal au premier ou deuxième axe longitudinal de l'élément mâle ou femelle monté sur cette première plaque.

Les avantages induits par cet ensemble de connexion sont analogues à ceux induits par le raccord rapide de l'invention.

L'invention sera mieux comprise et d'autres avantages de celle-ci apparaîtront plus clairement à la lumière de la description qui va suivre de trois modes de réalisation d'un raccord rapide et de deux modes de réalisation d'un ensemble de connexion conformes à son principe, donnée uniquement à titre d'exemple et faite en référence aux dessins annexés dans lesquels :
[Fig 1] la figure 1 est une coupe longitudinale de principe d'un ensemble de connexion conforme à l'invention, incluant un raccord rapide conforme à l'invention, en configuration désaccouplée,
[Fig 2] la figure 2 est une vue à plus grande échelle des détails A et B à la figure 1, dans laquelle des joints d'étanchéité sont représentés à l'extérieur des éléments de raccord auxquels ils appartiennent et une bague fendue est représentée, également à l'extérieur de l'élément de raccord auquel elle appartient, en perspective et à plus petite échelle,
[Fig 3] la figure 3 représente, en coupe longitudinale analogue à la figure 1 mais à plus petite échelle, trois étapes mises en oeuvre lors de l'accouplement des éléments mâle et femelle du raccord rapide des figures 1 et 2,
[Fig 4] la figure 4 représente, sur deux inserts C et D, des étapes de fabrication des joints d'étanchéité des éléments mâles et femelles du raccord rapide des figures 1 à 3,
[Fig 5] la figure 5 est une vue analogue à la figure 1 pour un ensemble de connexion et un raccord rapide conformes à un deuxième mode de réalisation, [Fig 6] la figure 6 est une vue à plus grande échelle du détail VI à la figure 5 [Fig 7] la figure 7 est une vue analogue à la figure 5 en configuration accouplée du raccord rapide des figures 5 et 6,
[Fig 8] la figure 8 est une coupe analogue à la figure 1 pour un raccord rapide conforme à un troisième mode de réalisation de l'invention, et [Fig 9] la figure 9 représente, en coupe longitudinale analogue à la figure 8, deux étapes mises en oeuvre lors de l'accouplement des éléments mâle et femelle du raccord rapide de la figure 8.

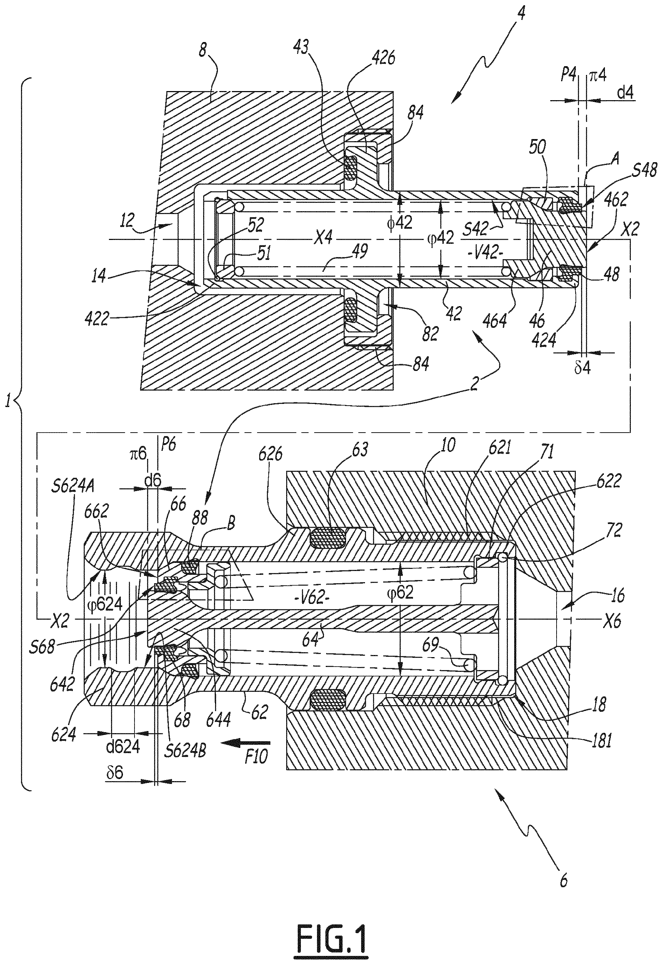

L'ensemble de connexion 1 représenté aux figures 1 à 3 comprend un raccord rapide 2 qui comprend un élément mâle 4 et un élément femelle 6 prévus pour s'emmancher l'un dans l'autre selon un axe d'emmanchement X2 du raccord rapide 2.

L'élément mâle 4 est monté sur une plaque de connexion 8 représentée partiellement et sur laquelle peuvent, en pratique, être montés plusieurs autres éléments de raccord mâle ou femelle non représentés.

De la même façon, l'élément femelle 6 est monté sur une plaque de raccordement 10 représentée partiellement et sur laquelle peuvent être montés plusieurs autres éléments de raccord mâle ou femelle non représentés.

La plaque de raccordement 10 est mobile, en ce sens qu'elle peut être rapprochée de la plaque de raccordement 8 qui est fixe, selon un mouvement de translation représenté par la flèche F10 et globalement parallèle à l'axe d'emmanchement X2, pour l'accouplement des éléments 4 et 6, c'est-à-dire la fermeture du raccord rapide 2. A l'ouverture du raccord rapide 2, la plaque de raccordement mobile 10 est éloignée de la plaque de raccordement fixe 8 selon un mouvement de translation inverse de celui de la flèche F10.

Les plaques de raccordement 8 et 10 et le raccord 2 appartiennent à l'ensemble de connexion 1, ainsi que les éventuels autres éléments de raccord montés sur ces plaques de raccordement.

La plaque de raccordement fixe 8 est traversée par une canalisation 12 qui débouche dans un alésage 14 dans lequel est montée une partie proximale ou arrière de l'élément mâle 4. De façon comparable, la plaque de raccordement mobile 10 est traversée par une canalisation 16 qui débouche dans un alésage 18 dans lequel est montée une partie proximale ou arrière de l'élément femelle 6.

A cet égard, pour chaque élément de raccord 4 ou 6, on distingue son côté proximal ou arrière, situé du côté de la canalisation 12 ou 14 à laquelle il est raccordé, et son côté distal, avant ou frontal, tourné vers son élément complémentaire, c'est-à-dire vers l'autre élément du raccord rapide 2, juste avant l'accouplement ou en cours d'accouplement. Ces notions de côté proximal ou arrière, d'une part, et distal, avant ou frontal, d'autre part s'appliquent également pour les pièces constitutives des éléments 4 et 6 et sont orientées dans le même sens.

L'élément mâle 4 comprend un corps tubulaire mâle 42 qui s'étend selon un axe longitudinal X4 de l'élément mâle 4, entre une extrémité proximale ou arrière 422 et une extrémité distale ou avant 424. L'extrémité proximale 422 est ouverte et disposée en regard du débouché de la canalisation 12 dans l'alésage 14.

Le corps tubulaire mâle 42 comprend également une collerette annulaire 426 qui entoure une portion tubulaire du corps 42 et qui s'étend vers l'extérieur, radialement à l'axe longitudinal X4, à distance de chacune des extrémités 422 et 424 le long de l'axe longitudinal X4. Entre la collerette 426 et l'extrémité 424, le corps tubulaire 422 est cylindrique à section circulaire constante, avec un diamètre externe Φ42 et un diamètre interne ϕ42, inférieur au diamètre Φ42 de deux fois l'épaisseur du corps tubulaire mâle 42. On note S42 la surface radiale interne du corps tubulaire mâle qui est de diamètre ϕ42.

La collerette 426 est disposée dans un lamage 82 de la plaque de raccord 8 qui entoure l'embouchure distale de l'alésage 14 et qui est d'un diamètre strictement supérieur à celui de la collerette 426. Un joint d'étanchéité 43 est interposé entre une face arrière de la collerette 426 et le fond du lamage 82. D'autre part, une bride filetée 84 est vissée dans un taraudage 86 du lamage 82 et présente une section en L qui lui permet de retenir, axialement le long de l'axe X4, la collerette 426 dans le lamage 82.

Des moyens non-représentés, tels qu'une clavette ou équivalent, permettent d'immobiliser en rotation la bride 84 par rapport à la plaque de raccordement 8.

La bride 84 offre un espace de translation radiale à la collerette 426 pour améliorer le positionnement de l'axe X2 par rapport à l'axe X6. Ainsi, le positionnement du corps tubulaire mâle 42 peut être ajusté par rapport à la plaque de raccordement 8 selon un mouvement dans un plan radial à l'axe longitudinal X4. Ceci permet d'aligner l'élément mâle 4 et l'élément femelle 6 en cours d'accouplement ou de désaccouplement, en faisant coïncider les axes X4 et X6.

L'extrémité distale 424 du corps tubulaire mâle 42 est obturé par un clapet 46 mobile en translation à l'intérieur du corps tubulaire mâle 42, le long de l'axe longitudinal X4, entre une position avancée et une position reculée. Dans sa position avancée, le clapet 46 obture une embouchure distale 428 de l'élément mâle 4, qui est définie par l'extrémité distale 424 et dont on note ϕ428 le diamètre.

Le diamètre ϕ428 est strictement inférieur au diamètre intérieur ϕ42 de la partie du corps tubulaire mâle 42 qui s'étend entre la collerette 426 et l'extrémité distale 424.

A l'opposé de l'embouchure 428 par rapport au clapet 46, le corps tubulaire mâle 42 définit un volume interne V42, qui est cylindrique à section circulaire de diamètre ϕ42 et centrée sur l'axe X4 et qui constitue une première cavité longitudinale de passage de fluide sous pression, en configuration accouplée du raccord rapide 2.

Sur une face interne de son extrémité distale 424, le corps tubulaire mâle 42 présente une gorge périphérique interne 423. Cette gorge 423 est définie, le long de l'axe longitudinal X4, entre une nervure interne 425 de l'extrémité distale 424 et une paroi annulaire 427 qui ressert l'extrémité distale 424 au niveau de l'embouchure 428. Le volume V42 est défini, le long de l'axe longitudinal X4, en arrière de la gorge 423.

On note S427 la surface frontale ou avant de la nervure 427, qui est opposée à la gorge 423 et au volume V42.

On note F423 la surface cylindrique de fond de la gorge 423, qui est une surface radiale interne de l'extrémité distale 424, et ϕ423 son diamètre. On note S423 la surface annulaire du bord avant de la gorge 423 qui est en pratique la surface arrière de la paroi annulaire 427, perpendiculaire à l'axe longitudinal X4. On note S'423 la surface annulaire du bord arrière de la gorge 423 qui est en pratique la surface avant de la nervure 425, également perpendiculaire à l'axe longitudinal X4.

Le clapet 46 comprend une partie centrale 46A en tronc de cône qui définit une surface externe tronconique S46A centrée sur l'axe X4 et convergente vers l'avant, ainsi qu'une partie avant 46B qui définit une surface externe cylindrique à section circulaire S46B. La partie avant 46B est située, le long de l'axe longitudinal X4, entre la partie intermédiaire 46A et une face avant 462 du clapet 46. Cette face avant 462 est également une face avant de l'élément mâle 4 car elle dépasse vers l'avant par rapport à la paroi annulaire 427, le long de l'axe X4, en configuration fermée de l'élément mâle, lorsque le clapet 46 obture l'extrémité avant 424 du corps tubulaire mâle 42.

D'autre part, le clapet 46 est équipé de deux pattes arrière 464 qui prolongent la partie intermédiaire vers l'arrière et permettent de le guider en translation sur la surface radiale interne S42 du corps tubulaire mâle 42, dans le volume V42.

On note V428 le volume annulaire défini, radialement à l'axe longitudinal X4, entre la paroi annulaire 427 et la surface S46B, autour du clapet 46, au niveau de l'embouchure 428.

On note ϕ46B le diamètre de la surface S46B. Dans l'exemple des figures 1 à 3, ce diamètre ϕ46B vaut 3,45 mm (millimètres), le diamètre ϕ428 vaut 4,5 mm et le diamètre ϕ423 vaut 5.3 mm.

On note 429 le bord radial externe avant de l'embouchure 428, c'est-à-dire le bord radial interne de la surface S427. En d'autres termes, le bord 429 délimite la jonction entre une face avant du corps tubulaire mâle 42, défini par la surface S427, et une surface radiale interne de la nervure 427, qui entoure l'embouchure 428 et le volume V428.

On note P4 un plan de bord de l'élément mâle 4, défini comme un plan radial à l'axe longitudinal X4 et passant par le bord 429. Le plan de bord P4 inclut la surface S427.

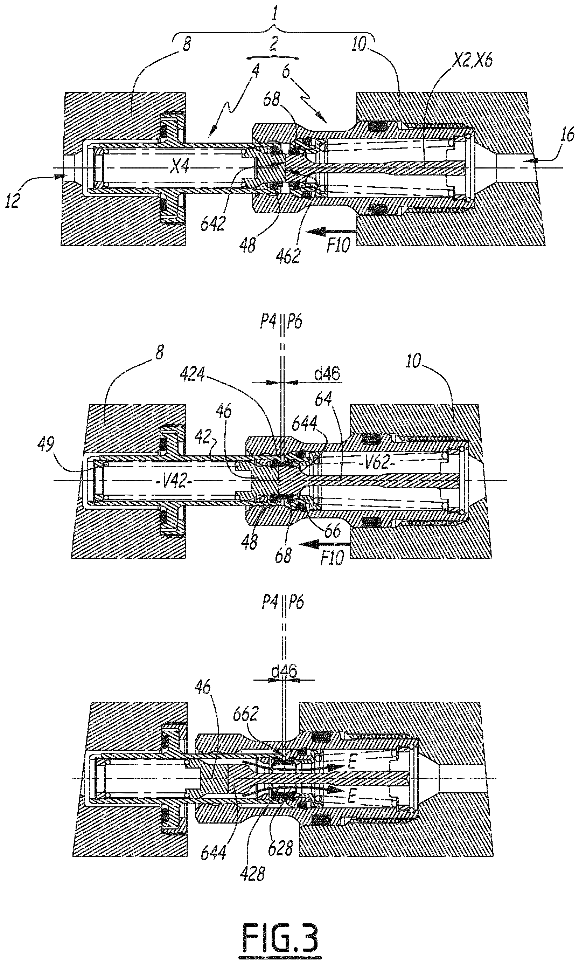

Un premier joint d'étanchéité 48 est monté dans la gorge 423 et s'étend autour de la partie avant cylindrique 46B du clapet mobile 46, lorsque le clapet est dans sa position avancée, comme visible aux figures 1 et 3.

La section du joint d'étanchéité 48 est pleine et constante autour de l'axe X4.

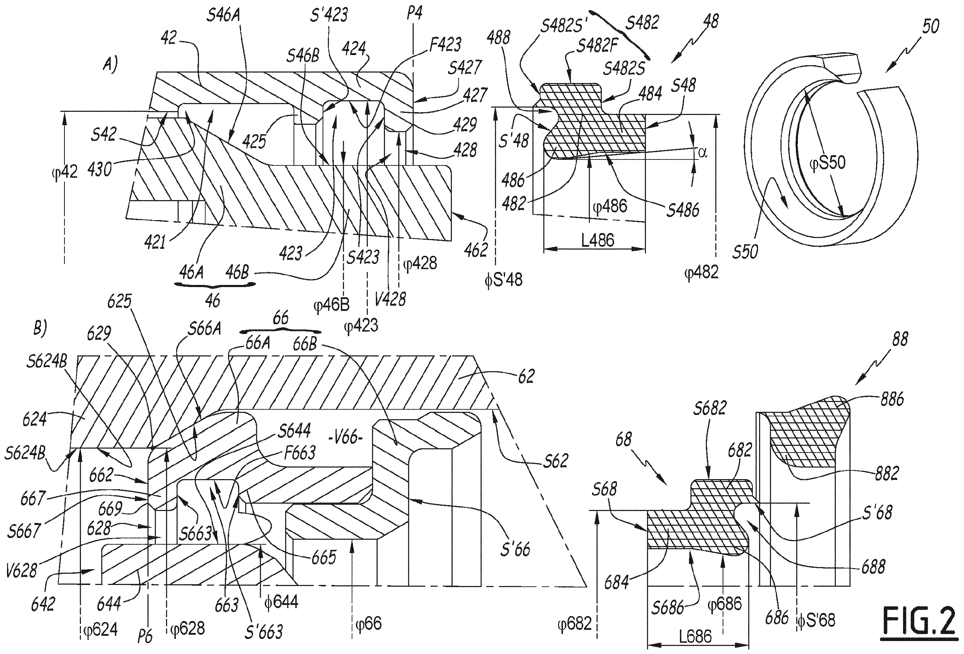

A la figure 2, le joint d'étanchéité 48 est représenté à l'extérieur du corps tubulaire mâle 42 ce qui montre sa géométrie sans contrainte, c'est-à-dire lorsqu'il n'est pas comprimé entre les éléments 42 et 46.

Une bague fendue 50 est également montée à l'intérieur de l'extrémité distale 424, et autour du clapet mobile 46. A la figure 2, cette bague fendue est représentée en perspective à l'extérieur du corps tubulaire mâle 42 pour expliciter sa géométrie. Cette bague fendue est pourvue d'une surface tronconique S50 complémentaire de la surface S46A, laquelle vient en appui contre cette surface S50 en position avancée du clapet 46, lorsqu'il obture l'extrémité distale 424. En d'autres termes, la bague fendue 50 forme un siège de réception du clapet 46 lorsqu'il obture l'embouchure 428.

On note ϕS50 le diamètre minimum de la surface S50.

La bague fendue 50 est reçue dans une gorge radiale interne 421 du corps tubulaire mâle 42, cette gorge 421 étant délimitée axialement, le long de l'axe X4, entre la nervure 425 et un épaulement 430. En configuration montée de la bague 50 dans la gorge 421, la surface tronconique S50 est convergente vers l'axe X4, en direction du plan de bord P4.

Le joint d'étanchéité 48 comprend un talon 482 d'accrochage dans la gorge 423, une partie centrale 484 et un bourrelet 486 disposé, par rapport à la partie centrale et radialement à l'axe X4 en configuration montée du joint d'étanchéité 48 dans la gorge 423, à l'opposé du talon 482. En configuration non contrainte du joint d'étanchéité 48, le bourrelet 486 a un diamètre interne ϕ486 dont la valeur minimum est strictement inférieure au diamètre ϕ46B de la surface S46B. Le bourrelet 486 forme une protrusion radiale, ou autrement dit un renflement périphérique, du côté interne du joint 48, de façon comparable à une lèvre de joint.

La surface extérieure S482 du talon 482 est complémentaire de la surface définie dans la gorge 423. Plus précisément, la surface S482 comprend une première portion S482F complémentaire de la surface F423, une deuxième portion S482S complémentaire de la surface S423 et une troisième portion S482S' complémentaire de la surface S'423.

Ainsi, le joint d'étanchéité 48 peut être fermement maintenu en place dans la gorge 423, par coopération de formes, voire au moyen d'une légère compression du talon 482 dans la gorge 423.

On note ϕ482 le diamètre minimum de la surface S482. Dans cet exemple, ce diamètre minimum ϕ482 est mesuré du côté de la deuxième portion S482S.

Le joint d'étanchéité 48 comprend également une surface frontale S48, orientée vers l'avant de l'élément mâle 4 lorsque le joint d'étanchéité 48 est monté dans le corps tubulaire mâle, et une surface arrière S'48 orientée à l'opposé de la surface frontale S48 vers l'arrière de l'élément mâle 4, c'est-à-dire du côté de la bague fendue 50 et du volume V42. La surface frontale S48 peut également être qualifiée de surface avant ou de surface distale du joint d'étanchéité 48.

Le joint d'étanchéité 48 comprend, en outre, une surface radiale interne S486 qui délimite le bourrelet 486 à l'opposé de la partie intermédiaire 484 et dont la longueur L486 mesurée parallèlement à l'axe X4 vaut 1,5 mm dans l'exemple des figures. Le bourrelet 486 forme un renflement, en d'autres termes une lèvre avec un profil bombé, d'appui contre le clapet 46.

En pratique, le diamètre interne ϕ486 du joint d'étanchéité 48 est le diamètre de la surface S486 et a une valeur variable le long de la surface S486, entre une valeur maximale, au voisinage de la surface frontale S48, et une valeur minimale, au niveau du bourrelet 486 lorsque celui-ci n'est pas contraint.

La surface arrière S'48 relie les surfaces S482 et S486 sur l'arrière du joint d'étanchéité 48 et définit une rainure 488 ouverte vers le volume V42, c'est-à-dire vers l'arrière. On note ΦS'48 le diamètre maximum de la surface arrière S'48 qui est égal au diamètre maximum de la rainure 488. Le diamètre ϕ42 est supérieur au diamètre ΦS'48. Le diamètre cpS50 est, quant à lui, inférieur au diamètre ΦS'48. Le diamètre ΦS'48 est supérieur au diamètre minimum ϕ482 de la surface S482.

Dans la configuration avancée du clapet mobile 46, la surface radiale interne S486 du joint d'étanchéité 48 est en appui contre la surface S46B du clapet 46, selon une direction radiale à l'axe X4, comme visible à la figure 1. La géométrie de la surface radiale interne S486 s'adapte alors à la géométrie de la surface radiale externe S46B qui est réalisée dans un matériau plus dur que celui du joint d'étanchéité 48. Par souci de simplification, cette adaptation de la surface S486 n'est pas montrée sur les figures 1 et 3, où le joint est représenté dans sa configuration non contrainte.

Comme visible aux figures 1 et 3, la surface frontale S48 est en saillie vers l'avant par rapport à l'extrémité distale 424 du corps tubulaire mâle 42, au niveau de l'embouchure 428. En d'autres termes, la surface frontale S48 est plus avancée que le premier plan de bord P4, le long de l'axe X4.

On note δ4 le décalage, le long de l'axe longitudinal X4, entre le plan P4 et la surface frontale S48. Comme expliqué ci-dessus, la valeur de ce décalage est non-nulle.

De façon avantageuse, pour un raccord rapide dont le diamètre ϕ42 a une valeur comprise entre 3 et 12 mm, la valeur de ce décalage axial δ4 est comprise entre 0.3 et 0.7 mm, de préférence entre 0.4 et 0.6 mm, de préférence encore de l'ordre de 0.5 mm.

Lorsque le clapet 46 est en configuration avancée, la surface frontale S48 est en retrait, le long de l'axe longitudinal X4, par rapport à la face avant 462 du clapet 46. On note π4 un plan parallèle au premier plan de bord P4, donc perpendiculaire à l'axe longitudinal X4, et contenant la face avant 462. En configuration avancée du clapet 46, la surface frontale S468 est située, le long de l'axe longitudinal X6, entre les plans P4 et π4. On note d4 la distance, mesurée parallèlement à l'axe X4, entre les plans P4 et π4, lorsque le clapet 46 est en position avancée.

De façon avantageuse, pour un raccord rapide dont le diamètre ϕ42 a une valeur comprise entre 3 et 12 mm, la distance d4 est inférieure ou égale à 1 mm.

Le joint d'étanchéité 48 occupe le volume V428.

L'élément mâle 4 comprend également un organe 49 de rappel élastique du clapet 46 en position avancée. Cet organe de rappel élastique 49 est disposé dans le volume V42 et, dans cet exemple, est constitué d'un ressort spiral qui s'étend le long de l'axe longitudinal X4 et qui prend appui sur les pattes 464 et sur une bague de butée 51 retenue dans le corps tubulaire mâle 42, à proximité de l'extrémité proximale 422, par un jonc élastique 52.

L'élément femelle 6 comprend un corps tubulaire femelle 62 qui s'étend selon un axe longitudinal X6 de l'élément femelle 6, entre une extrémité proximale ou arrière 622 et une extrémité distale ou avant 624. L'extrémité proximale 622 est ouverte et disposée en regard du débouché de la canalisation 16 dans l'alésage 18.

Le corps tubulaire femelle comprend également une surépaisseur annulaire 626, autrement dit une collerette externe, pourvue d'une gorge périphérique et externe dans laquelle est reçue un joint torique 63. La surépaisseur 626 est configurée pour se positionner dans une embouchure élargie de l'alésage 18, le joint 63 étant alors en appui contre la surface périphérique de cet alésage. D'autre part, le corps tubulaire femelle 62 est pourvu d'un filetage 621 qui coopère avec un taraudage 181 de l'alésage 18, de telle sorte que le corps tubulaire femelle 62 est vissé dans l'alésage 18 au voisinage de l'extrémité proximale 622. L'axe longitudinal X6 est ainsi fixe par rapport à la plaque de raccordement 10 et aligné sur l'axe d'emmanchement X2.

L'extrémité distale 624 du corps tubulaire femelle 62 est formée par une portion évasée du corps 62, dont le diamètre interne est étagé et supérieur ou égal au diamètre Φ42. La surface radiale interne de l'extrémité distale 624 comprend deux surfaces de portée S624A et S624B qui sont décalées l'une par rapport à l'autre le long de l'axe X6 et qui présentent le même diamètre intérieur ϕ624, celui-ci étant égal au diamètre Φ42. Ces surfaces de portée S624A et S624B permettent de guider la portion avant du corps tubulaire mâle 42 en saillie de la plaque de raccordement 8, en particulier l'extrémité distale 424 de ce corps tubulaire, lors de l'emmanchement des éléments mâle et femelle 4 et 6, à l'accouplement ou au désaccouplement.

On note d624 la distance, mesurée parallèlement à l'axe longitudinal X6, entre les surfaces de portée S624A et S624B. Afin de garantir un de guidage efficace de l'élément mâle 4 dans l'élément femelle 6, le rapport d624/ϕ624 est choisi supérieur à 0,2, de préférence égal à environ 0,25.

En arrière des deux surfaces de portée S624A et S624B, le corps tubulaire femelle loge un poussoir 64 qui s'étend le long de l'axe longitudinal X6 entre l'extrémité distale 624 et une embase 71 solidarisée au corps tubulaire femelle 62 au voisinage de son extrémité proximale 622, au moyen d'un jonc élastique 72. A son extrémité distale, le poussoir 64 a une tête 644 qui présente une face avant 642, en forme de disque centré sur l'axe longitudinal X6, et une surface périphérique cylindrique externe S644, également centrée sur cet axe. Avantageusement, la face avant 642 est de même section que la face avant 462.

Le poussoir 64 est apte à repousser le clapet mobile 46 de sa position avancée vers sa position reculée le long de l'axe longitudinal X4.

Le corps tubulaire femelle 62 présente, au voisinage de son extrémité distale 624, une surface interne tronconique 625, centrée sur l'axe X6 et convergente en direction des surfaces de portée S624A et S624B. On note 629 une arrête de jonction entre les surfaces S624B et 625.

Une embouchure distale 628 de l'élément femelle 6 est destinée à être obturée par la tête 644 associée à un tiroir 66 mobile en translation à l'intérieur du corps tubulaire femelle 66, le long de l'axe longitudinal X6, entre une position avancée où il obture l'embouchure 628 de l'élément femelle 6 et une position reculée ou arrière où il n'obture pas cette deuxième embouchure.

On note ϕ628 le diamètre de l'embouchure 628.

On note ϕ62 le diamètre intérieur de la partie du corps tubulaire 62 qui s'étend entre la tête 644 du poussoir 64 et l'extrémité proximale 622. Cette partie définit un volume interne V62 du corps tubulaire femelle 62, qui est cylindrique à section circulaire, de diamètre ϕ62 et centrée sur l'axe X6 et qui constitue une deuxième cavité longitudinale de passage de fluide sous pression, en configuration accouplée du raccord rapide 2.

Le diamètre ϕ628 est strictement inférieur au diamètre ϕ62.

Le tiroir 62 est formé de deux pièces annulaires 66A et 66B emboîtées l'une dans l'autre et qui constituent respectivement une partie avant et une partie arrière du tiroir 66.

Ici, les parties avant et arrière du clapet sont rapportées l'une sur l'autre par emboîtement. En variante non représentée, d'autre méthodes peuvent être utilisées pour rapporter les parties avant et arrière l'une sur l'autre, par exemple le vissage ou sertissage

La partie avant 66A du tiroir 66 définit une surface tronconique S66A convergente vers l'avant en direction de l'axe X6 et de géométrie complémentaire de celle de la surface 625. La surface 625 constitue ainsi un siège d'appui du tiroir 66 en position avancée de celui-ci.

La partie avant 66A comprend, sur son côté interne tourné vers la tête 644, une gorge périphérique interne 663 de forme comparable à la gorge 423 et dont on note F663 le fond, S663 une surface de bord avant et S'663 une surface de bord arrière.

La gorge 663 est définie, le long de l'axe longitudinal X6, entre un épaulement interne 665 du clapet 66 et une paroi annulaire 667 qui ressert la partie avant du clapet 66 au niveau de l'embouchure 628. La paroi annulaire 667 fait partie de l'extrémité distale du tiroir 66 qui définit la face avant 662 du tiroir 66. En particulier, la surface frontale ou avant S667 de la nervure 667, qui est opposée à la gorge 663 et au volume V62, constitue une partie de la face avant 662.

On note 669 le bord interne de la surface S667 qui constitue le bord radial avant de l'embouchure 628. En d'autres termes, le bord 669 délimite la jonction entre la face avant 662 du tiroir 66 et une surface radiale interne de la nervure 667, qui entoure l'embouchure 628. Cette surface radiale interne de la nervure 667 entoure également un volume V628 défini, de façon analogue au volume V428, comme un volume annulaire qui s'étend, radialement à l'axe longitudinal X6, entre la paroi annulaire 667 et la surface radiale externe S644 de la tête 644, autour du poussoir 64, au niveau de l'embouchure 628, lorsque le tiroir 66 est en position avancée.

On note P6 un plan de bord de l'élément femelle 6, défini comme un plan radial à l'axe longitudinal X6 et passant par le bord 669. Le plan de bord P6 inclut les surface 662 et S667.

Avantageusement, le plan de bord P6 passe par le bord 629 lorsque le tiroir est en position avancée.

La partie avant 66A définit, d'autre part, un volume V66 de forme annulaire et ouvert vers l'arrière, radialement vers l'extérieur par rapport à l'axe X6.

Un deuxième joint d'étanchéité 68 est monté dans la gorge 663 et s'étend à l'intérieur de la partie avant 66A du tiroir 66. Lorsque le tiroir est en position avancé, le joint d'étanchéité 68 s'étend également autour de la surface S644 de la tête 644 du poussoir 64, comme visible à la figure 1 et en parties supérieure et médiane de la figure 3. Dans cette position, le joint d'étanchéité 68 est en appui sur la paroi S644, selon une direction radiale à l'axe X6.

A la figure 2, le joint d'étanchéité 68 est représenté à l'extérieur du corps tubulaire femelle 62 pour montrer sa géométrie sans contrainte, c'est-à-dire lorsqu'il n'est pas comprimé entre les éléments 62 et 66.

La section du joint d'étanchéité 68 est pleine et constante autour de l'axe X6. Il occupe le volume V628.

Avantageusement, les sections des parois frontales S48 et S68 sont proches ou similaires pour prendre contact l'une sur l'autre à l'emmanchement des éléments de raccord du raccord rapide 2 et, de préférence, en configuration accouplée du raccord rapide.

De façon avantageuse, le joint d'étanchéité 68 est, dans ce mode de réalisation, identique au joint d'étanchéité 48.

Le joint d'étanchéité 68 comprend un talon 682, d'accrochage dans la gorge 663, une partie centrale 684 et un bourrelet 686 disposé, par rapport à la partie centrale et radialement à l'axe longitudinal X6, à l'opposé du talon 682. En configuration non contrainte du joint d'étanchéité 68, le bourrelet 686 a un diamètre interne cp686 dont la valeur minimum est strictement inférieure au diamètre Φ644 de la surface S644. Le bourrelet 686 forme une protrusion radiale, ou autrement dit un renflement périphérique, du côté interne du joint 68, de façon comparable à une lèvre de joint.

La surface extérieure S682 du talon 682 est complémentaire de la surface définie dans la gorge 663. Comme pour le joint 43, la surface S682 comprend une première portion complémentaire de la surface F663, une deuxième portion complémentaire de la surface S663 et une troisième portion complémentaire de la surface S'663. Ainsi, comme le joint d'étanchéité 48, le joint d'étanchéité 68 peut être fermement maintenu en place dans la gorge 663. On note ϕ682 le diamètre minimum de la surface S682. Dans cet exemple, ce diamètre minimum ϕ682 est mesuré du côté de la deuxième portion de la surface S682.

Le joint d'étanchéité 68 comprend également une surface frontale S68 orientée vers l'avant de l'élément femelle 6, lorsque le joint d'étanchéité 68 est monté sur le tiroir 66, et une surface arrière S'68 orientée à l'opposé de la surface frontale S68 vers l'arrière de l'élément femelle 6, c'est-à-dire du côté du volume V62. La surface frontale S68 peut être qualifiée de surface avant ou de surface distale du joint d'étanchéité 68.

Le joint d'étanchéité 68 définit, en outre, une surface radiale interne S686 qui délimite le bourrelet 686 à l'opposé de la partie intermédiaire 684. Lorsque le joint entoure la tête 644, la géométrie de la surface radiale interne S686 s'adapte alors à la géométrie de la surface radiale externe S644 qui est réalisée dans un matériau plus dur que celui du joint d'étanchéité 68. Par souci de simplification, cette adaptation de la surface S686 du joint n'est pas montrée sur les figures 1 et 3 où le joint est représenté dans sa configuration non contrainte.

La longueur L686 de la surface S686 est la même que la longueur L486.

En pratique, le diamètre interne ϕ686 du joint d'étanchéité 68 est le diamètre de la surface S686 et a une valeur variable le long de la surface S686, entre une valeur maximale, au voisinage de la surface frontale S68, et une valeur minimale, au niveau du bourrelet 686 lorsque celui-ci n'est pas contraint.

La surface arrière S'68 relie les surfaces S682 et S686 sur l'arrière du joint d'étanchéité 68 et définit une rainure 688 ouverte vers le volume V62, c'est-à-dire vers l'arrière. On note ϕS'68 le diamètre maximum de surface arrière S'68, qui est égal au diamètre maximum de la rainure 688. Le diamètre ϕS'68 est supérieur au diamètre minimum ϕ682 de la surface S682.

La surface frontale S68 est plus avancée que le plan de bord P6 le long de l'axe longitudinal X6, le long de l'axe X6. Autrement dit, la surface frontale S68 est en saillie vers l'avant par rapport à l'extrémité distale du tiroir 66, le long de l'axe X6.

Ainsi, le plan de bord P6 est en retrait par rapport à la surface frontale S68 du joint d'étanchéité 68, comme le plan de bord P4 est en retrait par rapport à la paroi frontale S48 du joint d'étanchéité 48.

On note δ6 le décalage, le long de l'axe longitudinal X6, entre le plan P6 et la surface frontale S68. Comme expliqué ci-dessus, la valeur de ce décalage est non-nulle.

De façon avantageuse, pour un raccord rapide dont le diamètre ϕ42 a une valeur comprise entre 3 et 12 mm, la valeur de ce décalage axial δ6 est comprise entre 0.1 et 1 mm, de préférence entre 0.1 et 0.5 mm, de préférence encore de l'ordre de 0.2 mm.

Lorsque le tiroir 66 est en configuration avancée, la surface frontale S68 est en retrait, le long de l'axe longitudinal X6, de la face avant 642 du poussoir 64. On note π6 un plan parallèle au deuxième plan de bord P6, donc perpendiculaire à l'axe longitudinal X6, et contenant la face avant 642. En configuration avancée du tiroir 66, la surface frontale S68 est située, le long de l'axe longitudinal X6, entre les plans P6 et π6. On note d6 la distance, mesurée parallèlement à l'axe X6, entre les plans P6 et π6, lorsque le clapet 46 est en position avancée.

Les parois annulaires 427 et 667 coopèrent avec les surfaces S482S et équivalentes afin de constituer des éléments de retenue vers l'avant des joints d'étanchéité 48 et 68 et d'empêcher un déplacement vers l'avant de ces joints.

Le tiroir 66 porte un troisième joint d'étanchéité 88, qui est monté dans le volume V66 et qui est en appui permanent contre la surface radiale interne S62 du corps tubulaire femelle 62, dans le volume V62. Ce joint 88 comprend un talon 882 complémentaire de la partie avant 66A, au niveau du volume V66, et un bourrelet 886 qui est en appui permanent contre la surface S62. Ce joint 88 peut être qualifié de joint périphérique car il réalise une étanchéité périphérique, plus précisément une étanchéité périphérique permanente, sur l'extérieur du tiroir 66.

L'adjectif permanent est utilisé ici pour signifier que le contact entre le joint d'étanchéité 88 et la surface S62 est présent dans toutes les positions du joint d'étanchéité par rapport au corps tubulaire femelle 62 le long de l'axe X6.

Un organe élastique 69 exerce un effort de rappel élastique du clapet 66 vers sa position avancée d'obturation de l'embouchure 628. Cet organe élastique est, de préférence, formé par un ressort spiral qui s'étend le long de l'axe X6, autour du poussoir 64 et qui prend appui sur une surface proximale S'66 de la partie arrière 66B du tiroir 66 et sur l'embase 71.

On note ϕ66 le diamètre minimum intérieur de la partie arrière 66B du tiroir 66. Ce diamètre minimum ϕ66 est inférieur au diamètre minimum ϕ682 de la surface S682. Grâce à cet aspect de l'invention, le tiroir 66 peut avoir des parois étroites, tout en étant bénéficiant d'une surface proximale d'appui adapté à l'organe élastique 69 qui applique un effort vers l'avant et en demeurant compatible avec la méthode de fabrication du joint d'étanchéité 48 mentionnée ci-dessous.

Dans la position avancée du tiroir 66 représenté à la figure 1, le tiroir 66 prend appui contre le siège formé par la surface 625 et le joint d'étanchéité 68 est en appui radial étanche contre la tête 644, alors que le joint 88 forme une barrière d'étanchéité périphérique avec la surface interne S62.

En position reculée du tiroir représenté en partie inférieure de la figure 3, c'est-à-dire lorsque les éléments mâle et femelle 4 et 6 sont accouplés, le joint d'étanchéité 68 n'est plus en contact avec la tête 644, de sorte qu'une veine fluide est formée dans l'élément femelle, radialement à l'intérieur du tiroir 66, ce que représentent les flèches d'écoulement E.

Les joints d'étanchéité 48, 68 et 88 sont obtenus par surmoulage d'un élastomère, notamment un caoutchouc synthétique ou naturel, sur une pièce métallique 48 ou 66A. La nature de l'élastomère permet de combiner des propriétés d'élasticité, d'adhérence, d'étanchéité et d'usure en fatigue par compression, qui sont globalement satisfaisantes.

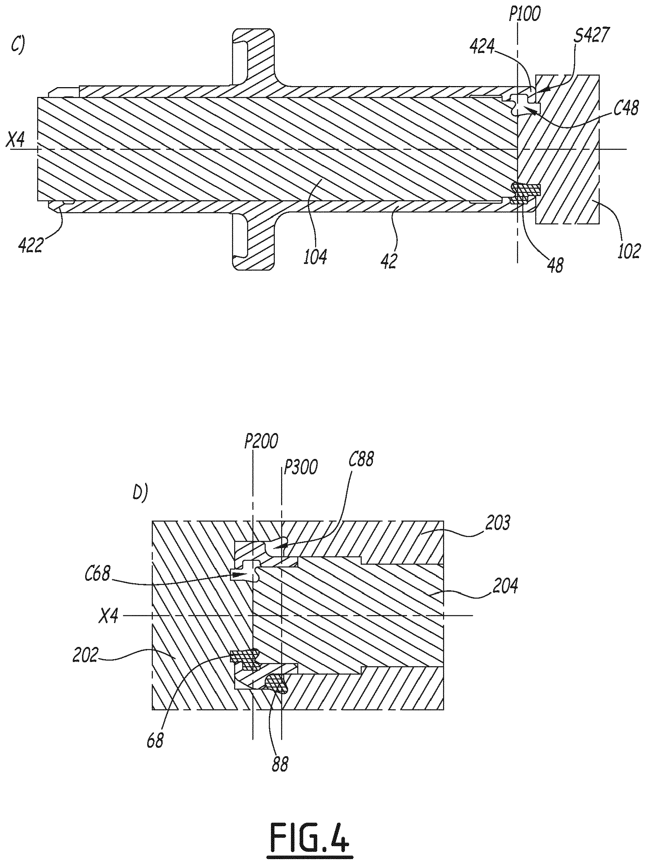

La figure 4 montre une façon de réaliser les joints d'étanchéité 48, 68 et 88 par surmoulage, respectivement sur le corps 42 et sur le clapet 66, plus particulièrement sur sa partie avant 66A. L'insert C représente la fabrication du joint d'étanchéité 48, alors que l'insert D représente la fabrication des joints 68 et 88. Sur chacun de ces inserts, la partie haute montre une situation avant injection de la matière destinée à constituer les joints, alors que la partie basse montre les joints moulés. Des canaux, utilisés pour guider la matière injectée vers des cavités de moulage des joints d'étanchéité, ne sont pas représentés.

Pour la réalisation du joint d'étanchéité 48, on utilise un outil avant 102 et une broche arrière 104. L'outil avant est disposé en appui contre la surface S427 de la paroi annulaire 427 et la broche arrière 104 est engagée dans le corps tubulaire mâle 42 à travers son extrémité proximale 422 jusqu'à venir au contact de l'outil avant 102 le long d'un premier plan de joint P100 qui est situé dans une zone correspondant à la partie du plus petit diamètre de la surface S486, c'est-à-dire au niveau du bourrelet 486, ceci afin de respecter la dépouille interne du joint d'étanchéité 48 créée par le bourrelet 486 et qui présente un angle α compris entre 5 et 10°. L'utilisation de la broche arrière est possible du fait que le diamètre ϕ42 est supérieur au diamètre ΦS'48.

Le surmoulage des joints d'étanchéité 68 et 88 est effectué aux moyens d'un outillage avant 202, d'une bague arrière 203 et d'une broche arrière 204 qui définissent entre eux des cavités C68 et C88. Un plan de joint P200 est défini entre les pièces 202 et 204, au même niveau du joint d'étanchéité 68 que le plan P100 vis-à-vis du joint d'étanchéité 48, ceci étant également compatible avec la dépouille du joint d'étanchéité 68 dû à la présence du bourrelet 686. Un autre plan de joint P300 est défini entre les pièces 202 et 203, au niveau de la cavité C88.

Plus précisément, le joint d'étanchéité 48 est surmoulé sur le corps tubulaire mâle 42 au sein d'une cavité C48 définie entre les pièces 42, 102 et 104, alors que les joints 68 et 88 sont surmoulés sur la partie avant 66A du clapet 66 dans des cavités C68 et C88 définies respectivement entre les pièces 66A, 202 et 204, pour la cavité C68, et entre les pièces 66A, 202 et 203, pour la cavité C88.

Lors de l'accouplement des éléments mâle et femelle 4 et 6, ceux-ci sont progressivement rapprochés, en déplaçant la plaque de raccordement 10 en direction de la plaque de raccordement 8, dans le sens de la flèche F10, pour passer successivement de la configuration désaccouplée représentée à la figure 1 dans les trois configurations représentées à la figure 3.

Au cours du mouvement d'accouplement, un cône de guidage prévu à l'extrémité distale avant 624 du corps tubulaire femelle 62 permet d'aligner l'axe X4 sur l'axe d'emmanchement X2, moyennant un éventuel déplacement du corps tubulaire mâle 42 dans l'alésage 14. Les portées de guidage formées par les surfaces S624A et S624B participent au bon alignement des axes X4 et X6 sur l'axe X2, en cours d'accouplement.

Dans la configuration de guidage et de prise de contact représentée en partie supérieure de la figure 3, les faces avant respectives 462 et 642 du clapet 46 et de la tête 644 ont été amenées en contact. Les faces avant 462 et 642 sont planes et amenées en contact plan sur plan. Les embouchures 428 et 628 des deux éléments de raccord sont respectivement obturés par le clapet 46 et par le tiroir 66.

Dans cette configuration, lorsque le clapet 46 prend contact avec le poussoir 64, l'air peut être chassé des faces avant 462 et 642 en contact, de façon à limiter l'apparition de bulles d'air dans la veine fluide à la connexion, ce qui est important dans le cas d'une application hors d'air. Cette configuration précède la configuration de prise d'étanchéité à l'accouplement.

Dans la configuration de prise d'étanchéité représentée en partie médiane de la figure 3, les surfaces frontales respectives S48 et S68 des joints d'étanchéité 48 et 68 sont en appui l'une contre l'autre parallèlement à l'axe d'emmanchement X2, ceci étant obtenu au moyen d'un recul du clapet 46 à l'intérieur du corps tubulaire mâle 42, sous l'action de la tête 644 du poussoir 64 qui repousse le clapet 46 de sa position avancée vers sa position reculée à l'encontre de l'effort exercé par l'organe élastique 49. Autrement dit, les premières S48 et deuxièmes S68 surfaces frontales des premiers 48 et deuxième 68 joints d'étanchéité sont aptes à venir contact l'une contre l'autre à l'emmanchement des éléments mâle et femelle du raccord rapide 2. A partir de cette configuration, le clapet a quitté son siège formé par la bague fendue 50 et recule dans la cavité formée par le volume V42. La prise d'étanchéité frontale des première et seconde surfaces frontales S48 et S68 prend en quelque sorte le relai à la perte d'étanchéité des surfaces radiales 486 et 686 des joints 48 et 68 sur respectivement le clapet 46 et le poussoir 64.

Dans cette configuration, suite au contact des surfaces frontale S48 et S68 les joints d'étanchéité 48 et 68 définissent une section d'étanchéité annulaire autour de l'axe d'emmanchement X2. Ces joints d'étanchéité 48 et 68 se déforment principalement en compression, plan sur plan, pour la prise d'étanchéité.

Dans la phase qui succède à la prise d'étanchéité, entre les positions représentées respectivement en partie médiane et en inférieure de la figure 3, la paroi cylindrique périphérique S644 de la tête du poussoir 64 progresse dans la section d'étanchéité formée par les deux joints d'étanchéité, en pénétrant à l'intérieur du joint d'étanchéité 48, alors que le contact entre les faces avant 462 et 642 est maintenu.

En poursuivant le mouvement d'emmanchement dans le sens de la flèche F10, on atteint la configuration accouplée représentée à la partie inférieure de la figure 3, où le clapet 46 est éloigné de la bague 50 et de l'embouchure 428, alors que le tiroir 66 est lui-même éloigné de la surface de siège 625 et de l'embouchure 628. Les surfaces frontales S48 et S68 des joints d'étanchéité 48 et 68 demeurent en appui l'une contre l'autre. Le fluide provenant de la conduite 12 s'écoule alors en direction de la conduite 16 à travers le raccord rapide 2, en passant de la cavité longitudinale formée par le volume V42 à la cavité longitudinale formée par le volume V62 au sein volume annulaire délimité par les joints d'étanchéité 48 et 68 en appui axial l'un contre l'autre, comme représenté par les flèches d'écoulement E.

Du fait de l'appui des surfaces frontales S48 et S68 l'une contre l'autre, les plans de bord P4 et P6 demeurent à distance l'un de l'autre, à la fois dans la configuration de prise d'étanchéité et dans la configuration accouplée. On note d46 la distance mesurée dans ces positions entre les plans P4 et P6, parallèlement à l'axe d'emmanchement X2. Ainsi, l'extrémité distale 424 du corps tubulaire mâle 42 et la face avant 662 du tiroir 66 sont séparées par la distance d46. Cette distance d46 est non nulle et a, dans l'exemple, une valeur comprise entre 0.2 et 0.4 mm.

Dans la configuration d'accouplement, le passage de fluide entre les volumes V42 et V62 est optimisé. En particulier, ce fluide circule dans le volume annulaire délimité par les joints d'étanchéité 48 et 68 autour de la tige du poussoir 64, à travers les embouchures distales 428 et 628 qui sont entourées radialement par les surfaces radiales internes S486 et S686 des joints d'étanchéité 48 et 68 dont les surfaces frontales S48 et S68 sont en appui axial, parallèlement à l'axe d'emmanchement X2.

Au cours du désaccouplement, qui résulte de l'éloignement des plaques de raccordement 8 et 10, du fait d'un mouvement de la plaque de raccordement 10 dans le sens inverse de la flèche F10, le poussoir 64 puis le clapet 46 reprennent chacun un contact cylindre/cylindre avec les joints d'étanchéité 48 et 68, de sorte que les faces avant 462 et 642 reviennent s'emmancher dans l'anneau formé par les premier et deuxième joints d'étanchéité 48 et 68. Le bourrelet 486 du joint d'étanchéité 48 et les parois internes S486 et S686 des joints d'étanchéité 48 et 68 forment une barrière d'étanchéité qui empêche la retenue de fluide sur les parois cylindriques externes S46B et S644 du clapet et du poussoir. Ainsi, et de façon avantageuse, cette phase de retour des éléments 644 et 42 dans le volume intérieur défini par les joints d'étanchéité 48 et 68 a pour effet de nettoyer les parois cylindriques externes du clapet 46 et de la tête 644 du poussoir 64, avant que les surfaces frontales S48 et S68 des joints d'étanchéité ne soient séparées l'une de l'autre et que le clapet 46 ne parvienne à nouveau en appui sur son siège formé par la bague fondue 50. En particulier, les parois cylindriques et externes S46B du clapet et S644 du poussoir sont libres de toute goutte du fluide qui est passé entre les cavités longitudinales V42 et V62, dans la configuration accouplée du raccord rapide 2.

Lors de la dernière phase du désaccouplement, on retire l'extrémité distale 424 du corps tubulaire mâle 42 du volume formé entre les surfaces de portée S624A et S624B et on éloigne les plaques de connexion 8 et 10 l'une de l'autre, jusqu'à revenir à la configuration désaccouplée de la figure 1.

Pendant les différentes phases de connexion et de déconnexion et dans toutes configurations représentées aux figures 1 et 3, le joint extérieur 88 monté sur le tiroir 66 assure l'étanchéité du tiroir mobile 66 avec le corps tubulaire femelle 62, en restant en contact avec la surface S62.

Dans la configuration désaccouplée et dans les phases de connexion et de déconnexion, la pression du fluide dans les volumes V42 et V62 s'exerce sur les surfaces arrière S'48 et S'68 des joints d'étanchéité 48 et 68, donc dans les rainures 488 et 688, ce qui a pour effet de comprimer radialement les joints d'étanchéité 48 et 68 contre les surfaces périphériques externes S46B du clapet 46 et S644 de la tête de poussoir 644. Ceci est dû notamment à la forme concave des surfaces S'48 et S'68 qui permet une flexion élastique des bourrelets 486 et 686 de façon radiale par rapport aux axes X4 et X6.

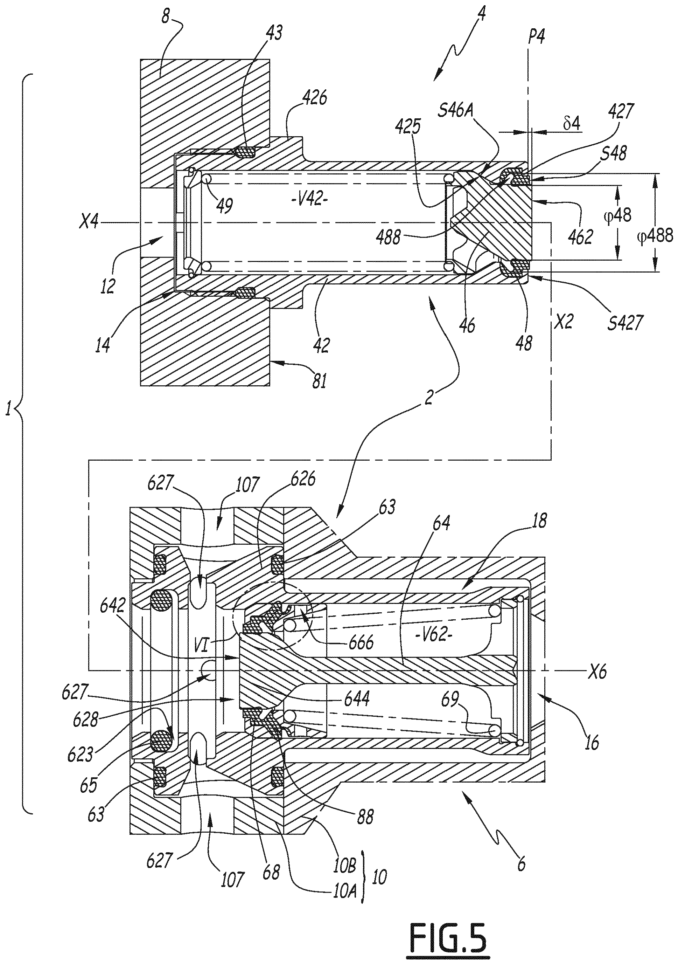

Dans les deuxième et troisième modes de réalisation représentés aux figures 5 et suivantes, les éléments analogues à ceux du premier mode de réalisation portent la même référence. Dans ce qui suit, on décrit principalement ce qui distingue ces modes de réalisation du premier.

Dans ce qui suit, si une référence est utilisée sur l'une des figures 5 et suivantes sans être mentionnée dans la description, elle désigne le même élément que celui portant cette référence dans le premier mode de réalisation. De même, si une référence est utilisée dans la description sans être reprise sur les figures 5 et suivantes, elle désigne le même objet que celui portant la même référence dans le premier mode de réalisation.

Dans le deuxième mode de réalisation des figures 5 à 7, l'élément mâle 4 du raccord rapide 2 est monté fixe dans la plaque de raccordement 8, au moyen d'un filetage et d'un taraudage prévus respectivement sur l'extérieur du corps tubulaire mâle 42 et dans l'alésage 14, dans lequel débouche la canalisation 12. Un joint 43 est interposé entre les parties 4 et 8 et une collerette 426 ménagée à l'extérieur du corps tubulaire mâle 42 vient en appui contre une face avant 81 de la plaque de raccordement 8.

La partie avant de l'élément mâle, en particulier l'extrémité distale 424 du corps tubulaire mâle 42, est analogue à celle du premier mode de réalisation et comprend un clapet 46, un joint d'étanchéité 48 dont la surface frontale S48 est disposée en avant d'un plan de bord P4 défini comme dans le premier mode de réalisation, le long d'un axe longitudinal X4 de l'élément mâle 4.

A la différence du premier mode de réalisation, il n'est pas prévu de bague fendue et la surface tronconique S46A du clapet 46 vient en appui contre une surface tronconique correspondante 425 ménagée sur l'intérieur de l'extrémité distale 424, lorsque le clapet 46 obture l'embouchure distale 428.

Le joint d'étanchéité 48 diffère de celui du premier mode de réalisation en ce que sa surface arrière S'48 présente une concavité plus marquée.

L'élément femelle 6 est monté sur la plaque de raccordement 10 avec une possibilité de mouvement dans un plan radial à son axe longitudinal X6, au sein de l'alésage 18. La plaque de raccordement 10 est bipartite et comprend une partie avant de plaque 10A et une partie arrière de plaque 10B qui sont assemblées, par des moyens non représentés, de façon à accommoder à la fois une partie arrière du corps tubulaire femelle 62 et une partie avant de celui-ci qui présente un diamètre supérieur à celui de la partie arrière du fait de l'existence d'une collerette 626 dans laquelle sont ménagés deux orifices 627 formant des passages pour un air de nettoyage des éventuels égouttures formées à l'interface entre les éléments mâle et femelle 4 et 6. Les orifices 627 sont alignées avec des orifices 107 ménagés dans la partie avant de plaque 10A, ces orifices étant eux-mêmes sélectivement alimentés en air sous pression en fonction des besoins, comme expliqué ci-après, grâce à une source d'air et des vannes non représentées.

La géométrie de l'alésage 18 et du corps 62 permet d'aligner l'axe X6 sur l'axe d'emmanchement X2, lequel est confondu avec l'axe X4 dans ce mode de réalisation. La partie avant de plaque 10A constitue une bride de retenue de l'élément femelle 6 sur la partie arrière de plaque 10B, les moyens d'assemblage des parties avant 10A et arrière 10B n'étant pas représentés.

La collerette 626 de l'élément femelle 6 est équipé de deux joints 63 montés sur ses faces avant et arrière et venant respectivement en appui contre deux faces planes des parties 10A et 10B de la plaque de raccordement. Les joints 63 assurent une étanchéité entre les passages 107 et 627, d'une part, et la partie de l'alésage 18 située entre ces orifices, d'autre part, vis-à-vis du reste de l'alésage 18.

Un joint torique 65 est logé dans une gorge périphérique interne 623 du corps tubulaire femelle 62 et destiné à venir au contact de la surface périphérique externe du corps tubulaire mâle 42, en avant de la collerette 426.

L'élément femelle 6 comprend deux joints 68 et 88 respectivement comparables aux joints 68 et 88 du premier mode de réalisation et remplissant les mêmes fonctions. En particulier, la surface frontale S68 du joint d'étanchéité 68 est située en avant d'un plan de bord P6 défini comme dans le premier mode de réalisation, vis-à-vis d'un tiroir 66 d'obturation d'une embouchure distale 628 de l'élément femelle 6.

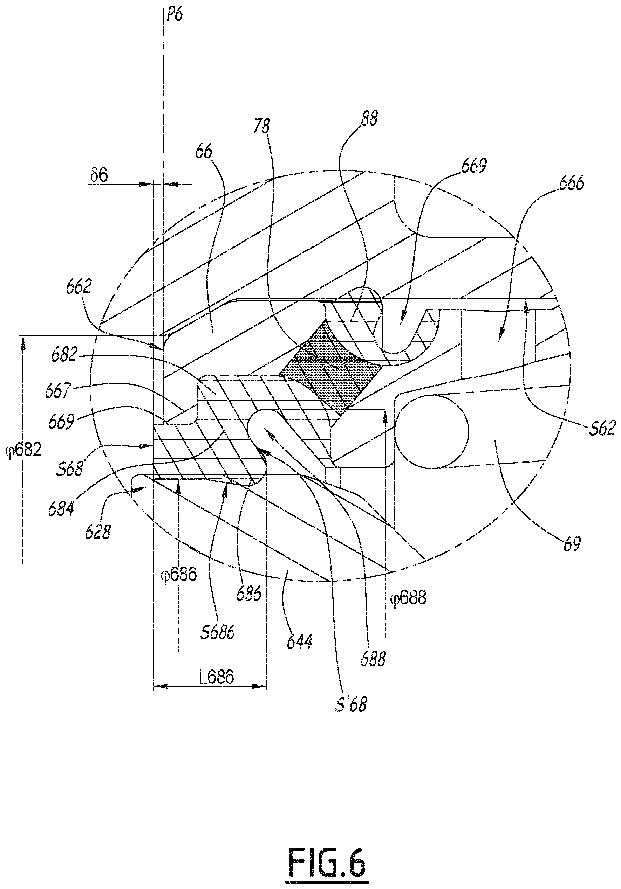

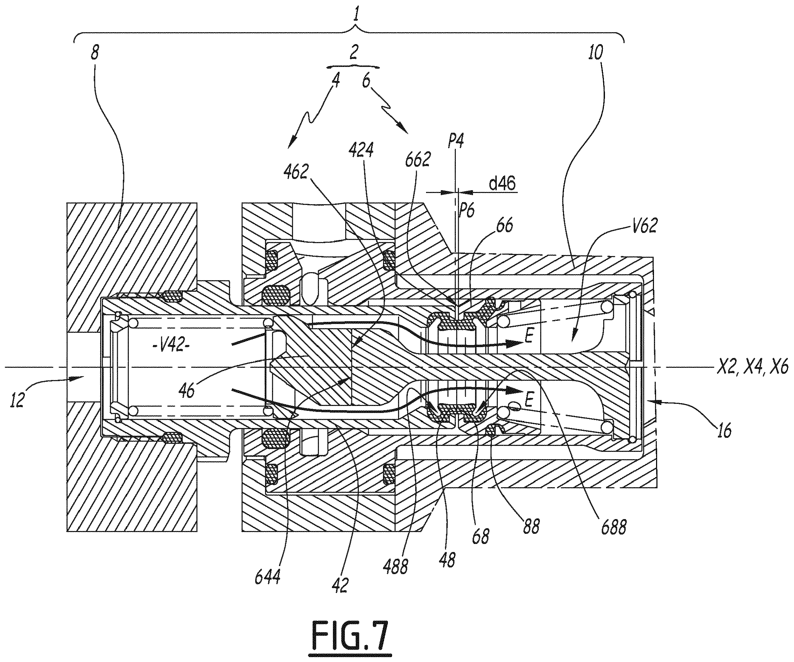

Dans ce mode de réalisation, le deuxième joint d'étanchéité 68 et le troisième joint d'étanchéité 88 sont monoblocs entre eux. Ainsi, les joints 68 et 88 sont réalisés de façon monobloc en étant reliés par quatre perçages obliques ménagés dans le clapet 66, dont deux sont situés dans le plan des figures 5 et 6 et dans le plan de la partie supérieure de la figure 7 mais pas dans le plan de la partie inférieure de cette figure 7. Ces perçages correspondent au volume grisé portant la référence 78 à la figure 6.

En comparaison au premier mode de réalisation, ces perçages peuvent être considérés comme reliant la gorge 663 au volume V66.

Une autre différence par rapport au premier mode de réalisation concerne le fait que le tiroir est ici monobloc, de telle sorte que l'organe de rappel élastique 69 vient directement en appui contre la partie du clapet sur laquelle sont surmoulés les joints 68 et 88.

La fabrication des joints 68 et 88 comprend une étape d'usinage complémentaire par rapport à celles du premier mode de réalisation et consistant à réaliser, après le surmoulage du joint d'étanchéité 68, une rainure 688 sur l'arrière de ce joint d'étanchéité 68, ce qui confère à la concavité de surface arrière S'68 un caractère plus prononcé que dans le premier mode de réalisation, comme bien visible à la figure 6.

De la même façon, la surface arrière S'48 du joint d'étanchéité 48 est pourvue d'une rainure usinée 488, ce qui lui confère une concavité plus prononcée.

Les rainures 488 et 688 sont réalisées par tournage, à l'aide d'un outil coudé. Ce mode d'obtention de la concavité des surfaces S'48 et S'68 est intéressant lorsque les procédés de surmoulage ne permettent pas d'utiliser une contre-forme pour réaliser les surfaces arrières concaves S'48 et S'68, notamment quand les diamètres des rainures 488 et 688 sont supérieurs aux diamètres internes des joints d'étanchéité, comme envisagé ci-après.

Ces rainures 488 et 688 confèrent une bonne souplesse aux joints 48 et 68 qui peuvent ainsi s'adapter aisément à la géométrie de l'embouchure 428 ou 628 dans laquelle ils pénètrent. La pression dans les rainures 488 et 688 a pour effet de maintenir les surfaces S48 et S68 l'une contre l'autre et confirmer la barrière d'étanchéité avec l'extérieur en configuration accouplée.

On note ϕ488 le diamètre maximum de la rainure 488 et ϕ688 le diamètre maximum de la rainure 688. Les diamètres ϕ488 et ϕ688 sont respectivement égaux aux diamètres maximum des surfaces S'48 et S'68. Le diamètre ϕ488 est supérieur au diamètre ϕ486, alors que le diamètre ϕ688 est supérieur au diamètre ϕ686. En outre, le diamètre ϕ42 est supérieur au diamètre ϕ486, donc au diamètre maximum de la surface S'48.

D'autre part, quatre perçages radiaux 666 sont ménagés dans le tiroir 666 et permettent un équilibrage de pression entre le volume interne V62 du corps tubulaire femelle 62 et une rainure 669 ménagée dans la partie arrière et externe du joint 88.

Cette rainure 669 peut être fabriquée de la même façon que la rainure 668 ou d'une autre façon.

Les faces frontales respectives S48 et S68 des joints d'étanchéité 48 et 68 sont chacune plus avancée qu'un plan de bord P4 ou P6 défini comme dans le premier mode de réalisation. Des décalages axiaux δ4 et δ6 définis comme dans le premier mode de réalisation présentent chacun une valeur non-nulle.

Dans l'exemple des figures, le diamètre externe Φ644 de la tête 644 est de 9,4 mm et le diamètre interne maximal ϕ686 du joint d'étanchéité 68 défini par sa surface S686 a une valeur variable entre une valeur maximum de 9,1 mm et une valeur minimum de 8,9 mm, la valeur minimum étant présente au niveau du bourrelet 686. La paroi interne S686 du joint d'étanchéité 68 a une longueur L686 parallèle à l'axe X6 égale à 2 mm, alors que la paroi frontale S68 est épaisse de1 mm.

Le fonctionnement du deuxième mode de réalisation est comparable à celui du premier mode de réalisation, sauf en ce qui concerne le fait que de l'air peut être injecté dans les orifices 107 et 627, avant que les surfaces frontales S48 et S68 des joints d'étanchéité 48 et 68 n'entrent en contact. Ceci permet de nettoyer les faces avant 462 et 642 et les surfaces frontales S48 et S68 de toute pollution potentiellement présente avant l'accouplement du raccord rapide.

Dans la configuration accouplée du raccord rapide représentée à la figure 7, le fluide provenant de la conduite 12 s'écoule en direction de la conduite 16 à travers le raccord rapide 2, comme représenté par les flèches d'écoulement E, alors que les plans P4 et P6, donc l'extrémité distale 424 du corps tubulaire mâle 42 et la face avant 662 du tiroir 66, sont distants d'une distance d46 non nulle.

En outre, du fait de la présence de la rainure 688 de forme plus prononcée que les rainures du premier mode de réalisation, l'effet de la pression de fluide sur les surfaces arrières S'48 et S'68 des joints d'étanchéité 48 et 68 est augmenté par rapport au premier mode en configuration désaccouplée. La pression dans les rainures 488 et 688 a pour effet de maintenir les surfaces S48 et S68 l'une contre l'autre et de confirmer la barrière d'étanchéité avec l'extérieur, en configuration accouplée.

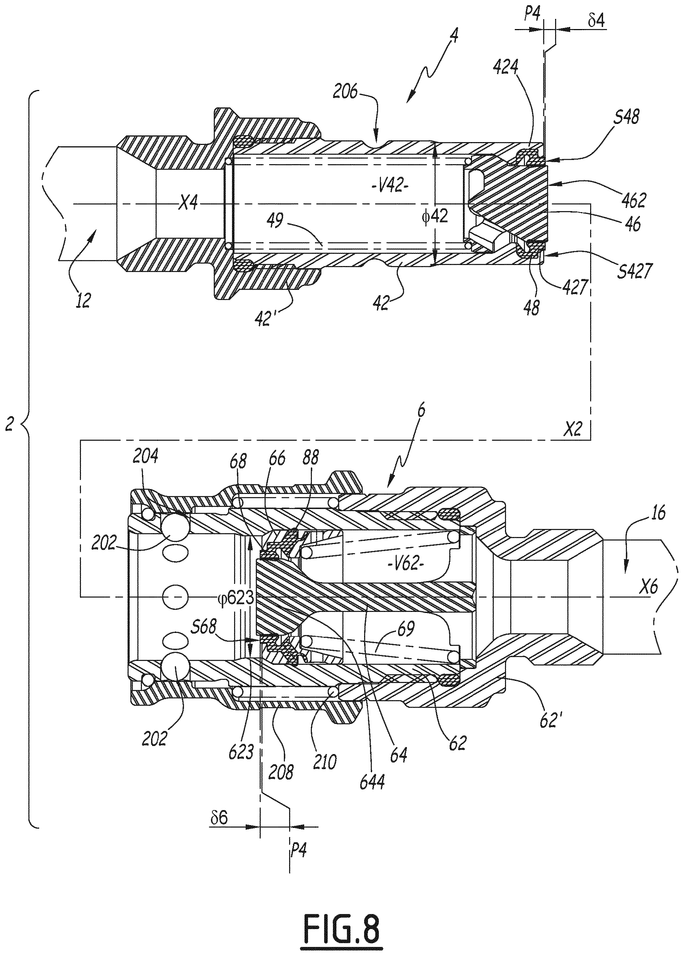

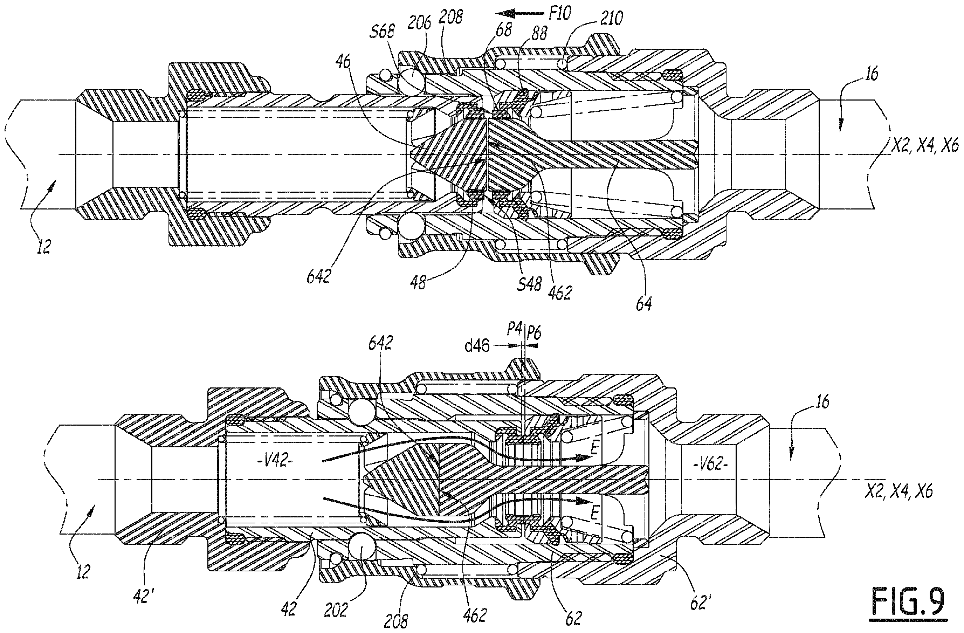

Dans le troisième mode de réalisation des figures 8 et 9, les éléments 4 et 6 du raccord rapide 2 ne sont pas montés sur des plaques de raccordement mais comprennent chacun un corps arrière 42', respectivement 62', vissé sur le corps tubulaire mâle ou femelle 42 ou 62 et adapté pour s'emmancher directement avec un tuyau souple ou rigide formant une canalisation 12 ou 16, au moyen de colliers de serrages non représentés.

Les deux joints d'étanchéité 48 et 68 sont ici identiques à ceux du deuxième mode de réalisation, ainsi que la structure interne des éléments mâle et femelle 4 et 6, notamment en ce qui concerne le clapet 46, le tiroir 44 et le poussoir 64.

En particulier, les faces frontales respectives S48 et S68 des joints d'étanchéité 48 et 68 sont chacune plus avancée qu'un plan de bord P4 ou P6 défini comme dans le premier mode de réalisation. Des décalages axiaux δ4 et δ6 définis comme dans le premier mode de réalisation présentent chacun une valeur non-nulle.

En l'absence de plaque de raccordement, il est prévu des moyens de verrouillage des éléments mâle et femelle en configuration accouplée du raccord rapide. Ces moyens de verrouillage comprennent des billes de verrouillage 202 logées dans des espaces radiaux 204 du corps tubulaire femelle 62, alors que le corps tubulaire mâle 42 est pourvu d'une rainure périphérique externe 206 de réception partielle de ces billes de verrouillage, en configuration accouplée du raccord rapide 2. Les billes de verrouillage 202 sont contrôlées au moyen d'une bague externe 208 montée mobile autour du corps tubulaire femelle 62, le long de l'axe longitudinal X6. Lors de l'accouplement ou du désaccouplement des éléments mâle et femelle 4 et 6, la bague de verrouillage 208 doit être manoeuvrée, à l'encontre d'un effort élastique exercé par un ressort 210, afin de permettre un mouvement radial centripète et d'amplitude limités des billes 202 dans les espaces radiaux 204.

La surface radiale externe du corps tubulaire mâle 42 au voisinage de son extrémité distale 424 présente un diamètre Φ42 égal au diamètre interne ϕ623 d'une collerette interne 623 du corps tubulaire femelle 62. Ainsi, la partie avant du corps tubulaire mâle 42 peut être guidée à l'intérieur du corps tubulaire femelle 62, avant que son clapet 46 n'entre en contact avec la tête 644 du poussoir 64, lors du mouvement d'emmanchement des éléments mâle et femelle 4 et 6 l'un dans l'autre, à l'accouplement, ou après que le clapet ait quitté la tête 644 au désaccouplement.

Dans le troisième mode de réalisation, les mouvements axiaux des éléments mâle et femelle 4 et 6 sont exercés en agissant directement sur leurs corps respectifs ou sur les parties arrière 42' et 62'. Pour le reste, le fonctionnement est identique à celui du premier mode de réalisation.

Quel que soit le mode de réalisation, l'invention offre une solution de raccord rapide qui limite, voire supprime complètement, les risques d'égoutture du fait qu'il n'existe pas d'espace entre les parois radiales externes S46B du clapet et S644 de la tête de poussoir lorsque leurs faces avant 462 et 642 sont en contact, ce qui évite de créer une zone de rétention de fluide. L'invention est également remarquable en qu'elle utilise un nombre limité de joints de clapèterie, hormis les joints d'étanchéité 48, 68 et 88. Ceci est appréciable en termes de prix de revient et de complexité de fabrication et de maintenance.

L'étanchéité réalisée entre les joints d'étanchéité 48 et 68 à la connexion et à la déconnexion du raccord rapide 2, c'est-à-dire à l'accouplement et au désaccouplement des éléments 4 et 6, évite les risques d'égoutture tout au long de ces opérations, ainsi que l'inclusion d'air dans la veine fluide lors de la connexion.

En outre, du fait que les joints d'étanchéité 48 et 68 ont des géométries identiques ou voisines, ils peuvent être réalisés, dans certains cas au moins, à partir des mêmes outils de surmoulage et/ou d'usinage.

Selon une variante non représentée de l'invention, le joint d'étanchéité 48 et/ou 68 est dépourvu de bourrelets 486 et 686. En d'autres termes, leurs surface interne 486 et/ou 686 est cylindrique à génératrice rectiligne.

D'autres géométries sont également envisageables pour ces joints d'étanchéité.

Les joints d'étanchéité 48 et 68 peuvent être obtenus par moulage, par surmoulage, par usinage ou par tout autre procédé accessible à l'homme du métier et présenter des formes de parois de joints adaptés à celles des pièces avec lesquelles ils interagissent.

La valeur des distances d4 et d6 peut être adaptée en fonction des autres dimensions des éléments mâle et femelle du raccord. Par exemple, pour une application nécessitant un élément de raccord avec un diamètre ϕ 42 de 20m et un élément de raccord avec un diamètre ϕ624 de 20mm, les valeurs de d4 et d6 seront adaptées entre 1 et 3mm, de préférence à 1.5mm.

Le maintien en configuration accouplée des éléments du raccord, ainsi que leur déplacement entre les configurations désaccouplées et accouplées peuvent être effectué par des moyens autre que les plaques de raccordement 8 et 10 et le système de verrouillage à billes 202 mentionnés ci-dessus.

Les joints d'étanchéité 48 et 68 peuvent être réalisés dans tout matériau compatible avec leur fonction et avec un contact avec le fluide traversant le raccord rapide 2, notamment en élastomère, comme envisagé ci-dessus, en silicone ou en polytétrafluoroéthylène.

Les modes de réalisation et variantes envisagées ci-dessus peuvent être combinés entre eux pour générer de nouveaux modes de réalisation d'invention.

## Revendications

1. Raccord rapide (2) pour la jonction amovible de deux canalisations (12, 16) parcourues par un fluide sous pression,
- ce raccord rapide comprenant un élément male (4) et un élément femelle (6) aptes à s'emmancher selon un axe d'emmanchement (X2), entre une configuration désaccouplée et une configuration accouplée du raccord rapide,
- l'élément mâle (4) comprenant
∘ un corps tubulaire mâle (42) qui s'étend, selon un premier axe longitudinal (X4), entre une extrémité proximale (422) et une extrémité distale (424) et qui présente
▪ une première cavité longitudinale (V42) de passage de fluide sous pression en configuration accouplée du raccord rapide,
▪ un premier plan de bord (P4) ménagé sur l'extérieur de l'extrémité distale (424) du corps tubulaire mâle et perpendiculaire au premier axe longitudinal ;
∘ une première embouchure distale (428) définie par l'extrémité distale (424) du corps tubulaire mâle et dont un diamètre (ϕ428) est inférieur à un diamètre (ϕ42) de la première cavité longitudinale ;
∘ un clapet (46) mobile, le long du premier axe longitudinal (X4), entre une position avancée, où il obture la première embouchure distale (428), et une position reculée, où il n'obture pas la première embouchure distale ;
∘ un premier joint d'étanchéité (48) ;
- l'élément femelle (6) comprenant
∘ un corps tubulaire femelle (62) qui s'étend, selon un deuxième axe longitudinal (X6), entre une extrémité proximale (622) et une extrémité distale (624) et qui comprend
▪ une deuxième cavité longitudinale (V62) de passage de fluide sous pression en configuration accouplée du raccord rapide,
∘ une deuxième embouchure distale (628) dont un diamètre (cp628) est inférieur à un diamètre (cp62) de la deuxième cavité longitudinale ;
∘ un poussoir (64) apte à repousser le clapet (46) mobile de sa position avancée vers sa position reculée le long du premier axe longitudinal (X4);
∘ un tiroir (66)
▪ monté autour du poussoir,
▪ mobile, le long du deuxième axe longitudinal (X6), entre une position avancée, où il obture la deuxième embouchure distale (628), et une position reculée, où il n'obture pas la deuxième embouchure distale et
▪ qui présente un deuxième plan de bord (P6), ménagé sur l'extérieur d'une extrémité distale (667) du tiroir et perpendiculaire au deuxième axe longitudinal (X6) ;
∘ un deuxième joint d'étanchéité (68) logé partiellement dans une gorge (663) du tiroir et qui prend appui sur une paroi (S644) du poussoir (64) lorsque le tiroir (66) est en position avancée,
- le premier joint d'étanchéité prenant appui sur une surface cylindrique (S46B) du clapet mobile (46), selon une direction radiale au premier axe longitudinal (X4), lorsque ce clapet mobile est en position avancée ;
- le deuxième joint d'étanchéité comprenant une deuxième surface frontale (S68) qui est plus avancée que le deuxième plan de bord (P6), le long du deuxième axe longitudinal (X6) ;
**caractérisé en ce que**
- le premier joint d'étanchéité (48) est logé partiellement dans une gorge (423) du corps tubulaire mâle (42) ;
- lorsque le tiroir (66) est en position avancée, le deuxième joint d'étanchéité (68) prend appui sur une paroi (S644) cylindrique du poussoir (64), selon une direction radiale au deuxième axe longitudinal (X6) ;
- le premier joint d'étanchéité comprend une première surface frontale (S48) qui est plus avancée que le premier plan de bord (P4), le long du premier axe longitudinal (X4) ; et
- les première (S48) et deuxième (S68) surfaces frontales des premiers (48) et deuxième (68) joints d'étanchéité sont aptes à venir en contact l'une contre l'autre à l'emmanchement des éléments mâle (4) et femelle (6) du raccord rapide (2).

2. Raccord rapide selon la revendication 1, **caractérisé en ce que**
- lorsque le clapet (46) est en position avancée, le premier joint d'étanchéité (48) occupe un volume annulaire (V428) défini, radialement au premier axe longitudinal (X4), entre le corps tubulaire mâle (42) et le clapet et, axialement le long du premier axe longitudinal, en avant de la gorge (423) du corps tubulaire mâle (42) et en arrière du premier plan de bord (P4) et/ou
- lorsque le tiroir (66) est en position avancée, le second joint d'étanchéité (68) occupe un volume annulaire (V628) défini, radialement au deuxième axe longitudinal (X6), entre le poussoir (64) et l'extrémité distale (667) du tiroir et, axialement le long du deuxième axe longitudinal, en avant de la gorge (663) du tiroir et en arrière du deuxième plan de bord (P6).

3. Raccord rapide selon l'une des revendications précédentes, **caractérisé en ce que**
- le clapet (46) a une face avant (462) tournée à l'opposé de la première cavité (V42) et disposée, axialement le long du premier axe longitudinal (X4), en avant de la première surface frontale (S48) en position avancée du clapet et/ou
- le poussoir (64) a une face avant (642) tournée à l'opposé de la deuxième cavité (V62) et disposée, axialement le long du deuxième axe longitudinal (X6), en avant de la deuxième surface frontale (S68) en position avancée du tiroir (66).

4. Raccord rapide selon l'une des revendications précédentes, **caractérisé en ce que**
- le premier joint d'étanchéité (48) comprend
∘ un premier talon (482) de blocage dans la gorge (423) du corps tubulaire mâle (42), ce premier talon étant délimité par une première surface (S482) de contact avec la gorge du corps tubulaire mâle,
∘ une première surface interne (S486) prévue pour prendre appui contre la paroi cylindrique (S46B) du clapet et
∘ un bourrelet (486) dont un diamètre non contraint (ϕ486) est inférieur à un diamètre extérieur (ϕ46B) du clapet (46) et qui est délimité par la première surface interne; et/ou
- le deuxième joint d'étanchéité (68) comprend
∘ un deuxième talon (682) de blocage dans la gorge (663) du tiroir (66), ce deuxième talon étant délimité par une deuxième surface (S682) de contact avec la cette gorge du tiroir,
∘ une deuxième surface interne (S686) prévue pour prendre appui contre la paroi cylindrique (S644) du poussoir et
∘ un bourrelet (686) dont un diamètre non contraint (ϕ686) est inférieur à un diamètre extérieur (Φ644) du poussoir (64) et qui est délimité par la deuxième surface interne.

5. Raccord rapide selon la revendication précédente, **caractérisé en ce que**
- le premier joint d'étanchéité (48) comprend une première surface arrière (S'48) qui
∘ est tournée vers la première cavité longitudinale (V42)
∘ relie la première surface de contact (S482) avec la première surface interne (S486) et
∘ est de forme concave et/ou
- le deuxième joint d'étanchéité (68) comprend une deuxième surface arrière (S'68) qui
∘ est tournée vers la deuxième cavité longitudinale (V62)
∘ relie la deuxième surface de contact (S682) avec la deuxième surface interne (S686) et
∘ est de forme concave.

6. Raccord rapide selon la revendication précédente, **caractérisé en ce que**
- la première surface arrière (S'48) délimite une première rainure (488) qui est ouverte sur la première cavité longitudinale (V42) en position avancée du clapet et dont un diamètre maximum (ϕ488) est supérieur à un diamètre minimum (ϕ482) de la première surface de contact (482) et/ou
- la deuxième surface arrière (S'68) délimite une deuxième rainure (688) qui est ouverte sur la deuxième cavité longitudinale (V62) en position avancée du clapet et dont un diamètre maximum (ϕ688) est supérieur à un diamètre minimum (ϕ682) de la deuxième surface de contact (S682).

7. Raccord rapide selon l'une des revendications 5 ou 6, **caractérisé en ce que**, en arrière de la gorge (423), le corps tubulaire mâle (42) a un diamètre interne (ϕ42) supérieur à un diamètre maximum (ΦS'48) de la première surface arrière (S'48).

8. Raccord rapide selon la revendication précédente, **caractérisé en ce que** l'élément mâle (4) comprend une bague (50)
- rapportée dans le corps tubulaire mâle (42) ;
- configurée pour former un siège (S50) d'appui du clapet (46) en position avancée et
- dont un diamètre interne (ϕS50) est inférieur à un diamètre maximum (ΦS'48) de la première surface arrière (S'48).

9. Raccord rapide selon l'une des revendications précédentes, **caractérisé en ce que** l'élément mâle (4) comprend un premier organe (49) de rappel élastique configuré pour rappeler le clapet (46) en position avancée et l'élément femelle comprend un deuxième organe (69) de rappel élastique configuré pour rappeler le tiroir (66) en position avancée.

10. Raccord rapide selon la revendication précédente, **caractérisé en ce que** le tiroir (66) est formé d'une partie avant (66A), qui comprend la gorge (663) où est partiellement logé le deuxième joint d'étanchéité (68), et d'une partie arrière (66B) rapportée sur la partie avant, qui comprend une surface d'appui proximale (S'66) pour le deuxième organe de rappel élastique et dont un diamètre intérieur (ϕ66) est inférieur un diamètre minimum (ϕ682) de la deuxième surface de contact (S682).

11. Raccord rapide selon l'une des revendications précédentes, **caractérisé en ce que** le tiroir (66) porte un troisième joint d'étanchéité (88) en contact avec le corps tubulaire femelle (62), en position avancée et en position reculée du tiroir.

12. Raccord rapide selon l'une des revendications précédentes, **caractérisé en ce que**, en configuration accouplée du raccord rapide (2), la première surface frontale (S48) est en appui axial, parallèlement à l'axe d'emmanchement (X2), contre la deuxième surface frontale (S68).

13. Raccord rapide selon la revendication 3, **caractérisé en ce que**
- lorsque le clapet (46) est en position avancée, la première surface frontale (S48) est située, le long du premier axe longitudinal (X4), entre le premier plan de bord (P4) et un premier plan parallèle (π4) au premier plan de bord, perpendiculaire au premier axe longitudinal (X4) et passant par la face avant (462) du clapet, et
- lorsque le clapet est en position avancée, le premier plan de bord (P4) et le premier plan parallèle (π4) sont séparés par une distance (d4) inférieure ou égale à 1 mm le long de cet axe et/ou
- lorsque le tiroir (66) est en position avancée, la deuxième surface frontale (S68) est située, le long du deuxième axe longitudinal X6, entre le deuxième plan de bord (P4) et un deuxième plan parallèle (π6) au premier plan de bord, perpendiculaire au deuxième axe longitudinal (X6) et passant par la face avant (642) du poussoir (64), et
- lorsque le tiroir est en position avancée, le deuxième plan de bord (P6) et le deuxième plan parallèle (π6) sont séparés par une distance (d6) inférieure ou égale à 1 mm le long de cet axe.

14. Raccord rapide selon l'une des revendications 3 et 13, **caractérisé en ce que**, en configuration accouplée du raccord rapide (2),
- le poussoir (64) maintient le clapet (46) en position reculée ;
- le fluide sous pression est libre de s'écouler (E) entre les première et deuxième cavités longitudinales (V42, V62) ; et
- l'extrémité distale (424) du corps tubulaire mâle (42) et une face avant (662) du tiroir (66) sont écartées l'une de l'autre, le long de l'axe d'emmanchement (X2), d'une distance (d46) non nulle.

15. Raccord rapide selon l'une des revendications précédentes, **caractérisé en ce que** le premier joint d'étanchéité (48) et le deuxième joint d'étanchéité (68) sont identiques.

16. Raccord rapide selon l'une des revendications précédentes, **caractérisé en ce que**
- l'élément femelle (6) comprend au moins deux surfaces de portée (S624A, S624B) centrées sur le deuxième axe longitudinal (X6) ;
- les surfaces de portée sont configurées pour guider l'élément mâle (4) en cours d'emmanchement ; et
- les surfaces de portée ont un diamètre de guidage commun (ϕ624) et sont décalées, le long du deuxième axe longitudinal, d'une distance (d624) supérieure ou égale à un cinquième du diamètre de guidage commun.

17. Ensemble (1) de connexion d'une plaque de raccordement mobile (10) à au moins une plaque de raccordement fixe (8), notamment pour raccorder des circuits de type hydraulique, **caractérisé en ce que**
- l'ensemble de connexion comprend au moins un raccord rapide (2) selon l'une des revendications précédentes ;
- l'élément mâle (4) du raccord rapide et l'élément femelle (6) du raccord rapide sont chacun montés sur une des plaques mobile et fixe, laquelle est traversée par une canalisation (12, 16) reliée fluidiquement à la première ou à la deuxième cavité longitudinale (V42, V62) de l'élément de raccord ; et
- une première plaque (8 ; 10), parmi la plaque mobile et la plaque fixe, est équipée d'une bride (84 ; 10A) de retenue de l'élément mâle ou femelle monté sur cette première plaque, cette bride de retenue permettant un mouvement de l'élément mâle ou femelle par rapport à la première plaque, dans un plan normal au premier ou deuxième axe longitudinal (X4 ; X6) de l'élément mâle ou femelle monté sur cette première plaque.

## Patentansprüche

1. Schnellkupplung (2) zur lösbaren Verbindung zweier Leitungen (12, 16), die von einem unter Druck stehenden Fluid durchströmt werden,
- diese Schnellkupplung umfassend ein Steckelement (4) und ein Buchsenelement (6), die geeignet sind, um entlang einer Einsteckachse (X2) zwischen einer entkuppelten Konfiguration und einer gekuppelten Konfiguration der Schnellkupplung zusammengesteckt zu werden,
- das Steckelement (4) umfassend
∘ einen rohrförmigen Steckkörper (42), der sich entlang einer ersten Längsachse (X4) zwischen einem proximalen Ende (422) und einem distalen Ende (424) erstreckt und der Folgendes aufweist
▪ einen ersten Längshohlraum (V42) für den Durchgang von unter Druck stehendem Fluid in der gekoppelten Konfiguration der Schnellkupplung,
▪ eine erste Randebene (P4), die an der Außenseite des distalen Endes (424) des rohrförmigen Steckkörpers ausgebildet ist und senkrecht zu der ersten Längsachse ist;
∘ eine erste distale Mündung (428), die durch das distale Ende (424) des rohrförmigen Steckkörpers definiert ist und deren Durchmesser (ϕ428) kleiner ist als ein Durchmesser (ϕ42) des ersten Längshohlraums;
o eine Klappe (46), die entlang der ersten Längsachse (X4) zwischen einer vorgeschobenen Position, in der es das erste distale Mundstück (428) verschließt, und einer zurückgezogenen Position, in der es das erste distale Mundstück nicht verschließt, beweglich ist;
o eine erste Dichtung (48);
- das Buchsenelement (6) umfassend
∘ einen rohrförmigen Buchsenkörper (62), der sich entlang einer zweiten Längsachse (X6) zwischen einem proximalen Ende (622) und einem distalen Ende (624) erstreckt und Folgendes umfasst
▪ einen zweiten Längshohlraum (V62) für den Durchgang von unter Druck stehendem Fluid in der gekoppelten Konfiguration der Schnellkupplung,
∘ ein zweites distales Mundstück (628), dessen Durchmesser (cp628) kleiner ist als ein Durchmesser (cp62) des zweiten Längshohlraums;
o einen Stößel (64), der geeignet ist, um die bewegliche Klappe (46) aus ihrer vorgeschobenen Position in ihre zurückgezogene Position entlang der ersten Längsachse (X4) zu drücken;
o einen Schieber (66),
▪ der um den Stößel montiert ist,
▪ der entlang der zweiten Längsachse (X6) zwischen einer vorgeschobenen Position, in der er das zweite distale Mundstück (628) verschließt, und einer zurückgezogenen Position, in der er das zweite distale Mundstück nicht verschließt, beweglich ist, und
▪ der eine zweite Randebene (P6) aufweist, die an der Außenseite eines distalen Endes (667) des Schiebers ausgebildet ist und senkrecht zu der zweiten Längsachse (X6) ist;
o eine zweite Dichtung (68), die teilweise in einer Kehle (663) des Schiebers untergebracht ist und an einer Wand (S644) des Schiebers (64) anliegt, wenn der Schieber (66) in der vorgeschobenen Position ist,
- wobei die erste Dichtung auf einer zylindrischen Oberfläche (S46B) der beweglichen Klappe (46) in einer Richtung radial zu der ersten Längsachse (X4) anliegt, wenn diese bewegliche Klappe in der vorgeschobenen Position ist;
- die zweite Dichtung umfassend eine zweite Stirnfläche (S68), die entlang der zweiten Längsachse (X6) weiter vorsteht ist als die zweite Randebene (P6);
**dadurch gekennzeichnet, dass**
- die erste Dichtung (48) teilweise in einer Kehle (423) des rohrförmigen Steckkörpers (42) untergebracht ist;
- wenn der Schieber (66) in der vorgeschobenen Position ist, die zweite Dichtung (68) an einer zylindrischen Wand (S644) des Schiebers (64) in einer Richtung radial zu der zweiten Längsachse (X6) anliegt;
- die erste Dichtung eine erste Stirnfläche (S48) umfasst, die entlang der ersten Längsachse (X4) weiter vorsteht als die erste Randebene (P4); und
- die erste (S48) und die zweite (S68) Stirnfläche der ersten (48) und der zweiten (68) Dichtung geeignet sind, um beim Zusammenstecken des Steck- (4) und des Buchsenelements (6) der Schnellkupplung (2) miteinander in Kontakt zu kommen.

2. Schnellkupplung nach Anspruch 1, **dadurch gekennzeichnet, dass**
- wenn die Klappe (46) in der vorgeschobenen Position ist, die erste Dichtung (48) ein ringförmiges Volumen (V428) einnimmt, das radial zu der ersten Längsachse (X4) zwischen dem rohrförmigen Steckkörper (42) und der Klappe und axial entlang der ersten Längsachse vor der Kehle (423) des rohrförmigen Steckkörpers (42) und hinter der ersten Randebene (P4) definiert ist und/oder
- wenn der Schieber (66) in der vorgeschobenen Position ist, die zweite Dichtung (68) ein ringförmiges Volumen (V628) einnimmt, das radial zu der zweiten Längsachse (X6) zwischen dem Schieber (64) und dem distalen Ende (667) des Schiebers und axial entlang der zweiten Längsachse vor der Kehle (663) des Schiebers und hinter der zweiten Randebene (P6) definiert ist.

3. Schnellkupplung nach einem der vorherigen Ansprüche, **dadurch gekennzeichnet, dass**
- die Klappe (46) eine Vorderseite (462) aufweist, die von dem ersten Hohlraum (V42) wegweist und axial entlang der ersten Längsachse (X4) vor der ersten Stirnfläche (S48) in der vorgeschobenen Position der Klappe angeordnet ist, und/oder
- der Schieber (64) eine Vorderseite (642) aufweist, die von dem zweiten Hohlraum (V62) wegweist und axial entlang der zweiten Längsachse (X6) vor der zweiten Stirnfläche (S68) in der vorgeschobenen Position der Schieber (66) angeordnet ist.

4. Schnellkupplung nach einem der vorherigen Ansprüche, **dadurch gekennzeichnet, dass**
- die erste Dichtung (48) Folgendes umfasst
∘ einen ersten Blockierabsatz (482) in der Kehle (423) des rohrförmigen Steckkörpers (42), wobei dieser erste Absatz durch eine erste Kontaktfläche (S482) mit der Kehle des rohrförmigen Steckkörpers begrenzt ist,
∘ eine erste Innenfläche (S486), die bereitgestellt ist, um an der zylindrischen Wand (S46B) der Klappe anzuliegen, und
∘ einen Wulst (486), dessen unbelasteter Durchmesser (ϕ486) kleiner ist als ein Außendurchmesser (ϕ46B) der Klappe (46) und der von der ersten Innenfläche begrenzt ist; und/oder
- wobei die zweite Dichtung (68) Folgendes umfasst
o einen zweiten Blockierabsatz (682) in der Kehle (663) des Schieber (66), wobei dieser zweite Absatz durch eine zweite Kontaktfläche (S682) mit dieser Kehle des Schiebers begrenzt ist,
∘ eine zweite Innenfläche (S686), die bereitgestellt ist, um an der zylindrischen Wand (S644) des Stößels anzuliegen, und
∘ einen Wulst (686), dessen unbelasteter Durchmesser (ϕ686) kleiner ist als ein Außendurchmesser (Φ644) des Stößels (64) und der durch die zweite Innenfläche begrenzt ist.

5. Schnellkupplung nach dem vorherigen Anspruch, **dadurch gekennzeichnet, dass**
- die erste Dichtung (48) eine erste hintere Fläche (S'48) umfasst, die
∘ dem ersten Längshohlraum (V42) zugewandt ist,
∘ mit der ersten Kontaktfläche (S482) mit der ersten Innenfläche (S486) verbunden ist, und
∘ konkav geformt ist, und/oder
- die zweite Dichtung (68) eine zweite hintere Fläche (S'68) umfasst, die
∘ dem zweiten Längshohlraum (V62) zugewandt ist,
∘ mit der zweiten Kontaktfläche (S682) mit der zweiten Innenfläche (S686) verbunden ist, und
∘ konkav geformt ist.

6. Schnellkupplung nach dem vorherigen Anspruch, **dadurch gekennzeichnet, dass**
- die erste hintere Fläche (S'48), die eine erste Nut (488) begrenzt, die in der vorgeschobenen Position der Klappe zu dem ersten Längshohlraum (V42) hin offen ist und deren maximaler Durchmesser (ϕ488) größer ist als ein minimaler Durchmesser (ϕ482) der ersten Kontaktfläche (482), und/oder
- die zweite hintere Fläche (S'68), die eine zweite Nut (688) begrenzt, die in der vorgeschobenen Position der Klappe zu dem zweiten Längshohlraum (V62) hin offen ist und deren maximaler Durchmesser (ϕ688) größer ist als ein minimaler Durchmesser (ϕ682) der zweiten Kontaktfläche (S682), und/oder.

7. Schnellkupplung nach einem der Ansprüche 5 oder 6, **dadurch gekennzeichnet, dass** hinter der Kehle (423) der rohrförmige Steckkörper (42) einen Innendurchmesser (ϕ42) aufweist, der größer ist als ein maximaler Durchmesser (ΦS'48) der ersten hinteren Fläche (S'48).

8. Schnellkupplung nach dem vorherigen Anspruch, **dadurch gekennzeichnet, dass** das Steckelement (4) einen Ring (50) umfasst,
- der in den rohrförmigen Steckkörper (42) eingesetzt ist;
- konfiguriert ist, um einen Sitz (S50) zur Anlage der Klappe (46) in der vorgeschobenen Position zu bilden, und
- dessen Innendurchmesser (ϕS50) kleiner ist als ein maximaler Durchmesser (ΦS'48) der ersten hinteren Fläche (S'48).

9. Schnellkupplung nach einem der vorherigen Ansprüche, **dadurch gekennzeichnet, dass** das Steckelement (4) ein erstes elastisches Rückstellglied (49) umfasst, das konfiguriert ist, um die Klappe (46) in die vorgeschobene Position zurückzustellen, und das Buchsenelement ein zweites elastisches Rückstellglied (69) umfasst, das konfiguriert ist, um den Schieber (66) in die vorgeschobene Position zurückzustellen.

10. Schnellkupplung nach dem vorherigen Anspruch, **dadurch gekennzeichnet, dass** der Schieber (66) aus einem vorderen Abschnitt (66A), der die Kehle (663) umfasst, in der die zweite Dichtung (68) teilweise aufgenommen ist, und einem hinteren Abschnitt (66B) gebildet ist, der an den vorderen Abschnitt angesetzt ist, der eine proximale Auflagefläche (S'66) für das zweite elastische Rückstellglied umfasst und dessen Innendurchmesser (ϕ66) kleiner ist als ein minimaler Durchmesser (ϕ682) der zweiten Kontaktfläche (S682).

11. Schnellkupplung nach einem der vorherigen Ansprüche, **dadurch gekennzeichnet, dass** der Schieber (66) eine dritte Dichtung (88) trägt, die in der vorgeschobenen und in der zurückgezogenen Position des Schiebers mit dem rohrförmigen Buchsenkörper (62) in Kontakt ist.

12. Schnellkupplung nach einem der vorherigen Ansprüche, **dadurch gekennzeichnet, dass** in der gekuppelten Konfiguration der Schnellkupplung (2) die erste Stirnfläche (S48) parallel zu der Einsteckachse (X2) axial an der zweiten Stirnfläche (S68) anliegt.

13. Schnellkupplung nach Anspruch 3, **dadurch gekennzeichnet, dass**
- wenn die Klappe (46) in der vorgeschobenen Position ist, sich die erste Stirnfläche (S48) entlang der ersten Längsachse (X4) zwischen der ersten Randebene (P4) und einer ersten Ebene (π4) parallel zu der ersten Randebene, senkrecht zu der ersten Längsachse (X4) und durch die Vorderseite (462) der Klappe befindet, und
- wenn die Klappe in der vorgeschobenen Position ist, die erste Randebene (P4) und die erste parallele Ebene (π4) durch einen Abstand (d4) von weniger als oder gleich wie 1 mm entlang dieser Achse getrennt sind, und/oder
- wenn der Schieber (66) in der vorgeschobenen Position ist, sich die zweite Stirnfläche (S68) entlang der zweiten Längsachse X6 zwischen der zweiten Randebene (P4) und einer zweiten Ebene parallel (π6) zu der ersten Randebene, senkrecht zur zweiten Längsachse (X6) und durch die Vorderseite (642) des Stößels (64) befindet, und
- wenn der Schieber in der vorgeschobenen Position ist, die zweite Randebene (P6) und die zweite parallele Ebene (π6) durch einen Abstand (d6) von weniger als oder gleich wie 1 mm entlang dieser Achse getrennt sind.

14. Schnellkupplung nach einem der Ansprüche 3 und 13, **dadurch gekennzeichnet, dass** in der gekoppelten Konfiguration der Schnellkupplung (2),
- der Stößel (64) die Klappe (46) in der zurückgezogenen Position hält;
- das unter Druck stehende Fluid frei zwischen dem ersten und dem zweiten Längshohlraum (V42, V62) fließen kann (E); und
- das distale Ende (424) des rohrförmigen Steckkörpers (42) und eine Vorderseite (662) des Schiebers (66) entlang der Einsteckachse (X2) um einen Abstand (d46) ungleich Null voneinander beabstandet sind.

15. Schnellkupplung nach einem der vorherigen Ansprüche, **dadurch gekennzeichnet, dass** die erste Dichtung (48) und die zweite Dichtung (68) identisch sind.

16. Schnellkupplung nach einem der vorherigen Ansprüche, **dadurch gekennzeichnet, dass**
- das Buchsenelement (6) mindestens zwei Lagerflächen (S624A, S624B) umfasst, die auf der zweiten Längsachse (X6) zentriert sind;
- die Lagerflächen konfiguriert sind, um das Steckelement (4) beim Einstecken zu führen; und
- die Lagerflächen einen gemeinsamen Führungsdurchmesser (ϕ624) aufweisen und entlang der zweiten Längsachse um einen Abstand (d624) versetzt sind, der größer als oder gleich wie ein Fünftel des gemeinsamen Führungsdurchmessers ist.

17. Anordnung (1) zum Verbinden einer beweglichen Kupplungsplatte (10) mit mindestens einer festen Kupplungsplatte (8), insbesondere zum Verbinden von Kreisläufen vom Typ Hydraulik, **dadurch gekennzeichnet, dass**
- die Verbindungsanordnung mindestens eine Schnellkupplung (2) nach einem der vorherigen Ansprüche umfasst;
- das Steckelement (4) der Schnellkupplung und das Buchsenelement (6) der Schnellkupplung jeweils an einer von der beweglichen und der festen Platte montiert sind, die von einer Leitung (12, 16) durchquert wird, die fluidisch mit dem ersten oder dem zweiten Längshohlraum (V42, V62) des Kupplungselements verbunden ist; und
- eine erste Platte (8; 10) von der beweglichen Platte und der festen Platte mit einem Halteflansch (84; 10A) des auf dieser ersten Platte montierten Steck- oder Buchsenelements ausgestattet ist, wobei dieser Halteflansch eine Bewegung Steck- oder Buchsenelements in Bezug auf die erste Platte in einer Ebene senkrecht zu der ersten oder der zweiten Längsachse (X4; X6) des auf dieser ersten Platte montierten Steck- oder Buchsenelements ermöglicht.

## Claims

1. A quick coupling (2) for the detachable connection of two pipes (12, 16) through which a pressurised fluid flows,
- this quick coupling comprising a male element (4) and a female element (6) capable of fitting together along an insertion axis (X2), between an uncoupled configuration and a coupled configuration of the quick coupling,
- the male element (4) comprising
∘ a male tubular body (42) which extends along a first longitudinal axis (X4) between a proximal end (422) and a distal end (424) and which has
▪ a first longitudinal cavity (V42) for the passage of pressurised fluid in the coupled configuration of the quick coupling,
▪ a first edge plane (P4) formed on the outside of the distal end (424) of the male tubular body and perpendicular to the first longitudinal axis;
∘ a first distal mouth (428) defined by the distal end (424) of the male tubular body and having a diameter (ϕ428) smaller than a diameter (ϕ42) of the first longitudinal cavity;
∘ a shutter (46) that is movable along the first longitudinal axis (X4) between an advanced position, where it closes the first distal mouth (428), and a retracted position, where it does not close the first distal mouth;
∘ a first seal (48);
- the female element (6) comprising
∘ a female tubular body (62) which extends along a second longitudinal axis (X6) between a proximal end (622) and a distal end (624) and which comprises
▪ a second longitudinal cavity (V62) for the passage of pressurised fluid in the coupled configuration of the quick coupling,
∘ a second distal mouth (628), a diameter (cp628) of which is smaller than a diameter (cp62) of the second longitudinal cavity;
∘ a plunger (64) capable of pushing the movable shutter (46) from its advanced position to its retracted position along the first longitudinal axis (X4);
∘ a spool (66)
▪ mounted around the plunger,
▪ movable along the second longitudinal axis (X6) between an advanced position, where it closes the second distal mouth (628), and a retracted position, where it does not close the second distal mouth, and
▪ which has a second edge plane (P6), formed on the outside of a distal end (667) of the spool and perpendicular to the second longitudinal axis (X6);
∘ a second seal (68) which is partially housed in a groove (663) in the spool and which rests on a wall (S644) of the plunger (64) when the spool (66) is in the advanced position,
- the first seal resting on a cylindrical surface (S46B) of the movable shutter (46), in a direction radial to the first longitudinal axis (X4), when this movable shutter is in the advanced position;
- the second seal comprising a second front surface (S68) which is more advanced than the second edge plane (P6) along the second longitudinal axis (X6);
**characterised in that**
- the first seal (48) is partially housed in a groove (423) in the male tubular body (42);
- when the spool (66) is in the advanced position, the second seal (68) rests on a cylindrical wall (S644) of the plunger (64) in a direction radial to the second longitudinal axis (X6);
- the first seal comprises a first front surface (S48) which is more advanced than the first edge plane (P4) along the first longitudinal axis (X4); and
- the first (S48) and second (S68) front surfaces of the first (48) and second (68) seals are adapted to contact each other when the male (4) and female (6) elements of the quick coupling (2) are fitted together.

2. The quick coupling according to claim 1, **characterised in that**
- when the shutter (46) is in the advanced position, the first seal (48) occupies an annular volume (V428) defined, radially to the first longitudinal axis (X4), between the male tubular body (42) and the shutter and, axially along the first longitudinal axis, in front of the groove (423) of the male tubular body (42) and to the rear of the first edge plane (P4) and/or
- when the spool (66) is in the advanced position, the second seal (68) occupies an annular volume (V628) defined, radially to the second longitudinal axis (X6), between the plunger (64) and the distal end (667) of the spool and, axially along the second longitudinal axis, in front of the groove (663) of the spool and behind the second edge plane (P6).

3. The quick coupling according to any of the preceding claims, **characterized in that**
- the shutter (46) has a front face (462) facing away from the first cavity (V42) and arranged axially along the first longitudinal axis (X4) in front of the first front surface (S48) in the advanced position of the shutter and/or
- the plunger (64) has a front face (642) facing away from the second cavity (V62) and arranged axially along the second longitudinal axis (X6) in front of the second front surface (S68) in the advanced position of the plunger (66).

4. The quick coupling according to any of the preceding claims, **characterized in that**
- the first seal (48) comprises
∘ a first locking bead (482) for hooking in the groove (423) of the male tubular body (42), this first bead being delimited by a first surface (S482) of contact with the groove of the male tubular body,
∘ a first internal surface (S486) designed to rest against the cylindrical wall (S46B) of the shutter and
∘ a bulge (486) whose unstressed diameter (ϕ486) is smaller than an outer diameter (ϕ46B) of the shutter (46) and which is bounded by the first inner surface; and/or
- the second seal (68) comprises
∘ a second locking bead (682) for hooking in the groove (663) of the spool (66), this second bead being delimited by a second surface (S682) in contact with this groove of the spool,
∘ a second internal surface (S686) designed to rest against the cylindrical wall (S644) of the plunger and
∘ a bulge (686) whose unstressed diameter (ϕ686) is smaller than an outer diameter (Φ644) of the plunger (64) and which is bounded by the second inner surface.

5. The quick coupling according to the preceding claim, **characterized in that**
- the first seal (48) comprises a first rear surface (S'48) which
∘ faces the first longitudinal cavity (V42)
∘ connects the first contact surface (S482) with the first internal surface (S486) and
∘ is concave in shape and/or
- the second seal (68) comprises a second rear surface (S'68) which
∘ faces the second longitudinal cavity (V62)
∘ connects the second contact surface (S682) with the second internal surface (S686) and
∘ is concave in shape.

6. The quick coupling according to the preceding claim, **characterized in that**
- the first rear surface (S'48) delimits a first groove (488) which is open to the first longitudinal cavity (V42) in the advanced position of the shutter and whose maximum diameter (ϕ488) is greater than a minimum diameter (ϕ482) of the first contact surface (482) and/or
- the second rear surface (S'68) delimits a second groove (688) which is open to the second longitudinal cavity (V62) in the advanced position of the shutter and whose maximum diameter (ϕ688) is greater than a minimum diameter (ϕ682) of the second contact surface (S682).

7. The quick coupling according to one of claims 5 or 6, **characterised in that**, behind the groove (423), the male tubular body (42) has an internal diameter (ϕ42) greater than a maximum diameter (ΦS'48) of the first rear surface (S'48).

8. The quick coupling according to the preceding claim, **characterized in that** the male element (4) comprises a ring (50)
- fitted into the male tubular body (42);
- configured to form a seat (S50) for supporting the shutter (46) in the advanced position and
- whose inner diameter (cpS50) is smaller than a maximum diameter (ΦS'48) of the first rear surface (S'48).

9. The quick coupling according to one of the preceding claims, **characterized in that** the male element (4) comprises a first resilient biasing member (49) configured to bias the shutter (46) into the advanced position and the female element comprises a second resilient biasing member (69) configured to bias the spool (66) into the advanced position.

10. The quick coupling according to the preceding claim, **characterised in that** the spool (66) is formed of a front part (66A), which comprises the groove (663) where the second seal (68) is partially housed, and of a rear part (66B) attached to the front part, which comprises a proximal bearing surface (S'66) for the second resilient biasing member and an internal diameter (ϕ66) of which is smaller than a minimum diameter (ϕ682) of the second contact surface (S682).

11. The quick coupling according to any of the preceding claims, **characterised in that** the spool (66) carries a third seal (88) in contact with the female tubular body (62) in the advanced and retracted positions of the spool.

12. The quick coupling according to one of the preceding claims, **characterized in that**, in the coupled configuration of the quick coupling (2), the first front surface (S48) is in axial contact, parallel to the insertion axis (X2), with the second front surface (S68).

13. The quick coupling according to claim 3, **characterised in that**
- when the shutter (46) is in the advanced position, the first front surface (S48) is located, along the first longitudinal axis (X4), between the first edge plane (P4) and a first plane parallel (π4) to the first edge plane, perpendicular to the first longitudinal axis (X4) and passing through the front face (462) of the shutter, and
- when the shutter is in the advanced position, the first edge plane (P4) and the first parallel plane (π4) are separated by a distance (d4) less than or equal to 1 mm along this axis and/or
- when the spool (66) is in the advanced position, the second front surface (S68) is located, along the second longitudinal axis (X6), between the second edge plane (P4) and a second plane parallel (π6) to the first edge plane, perpendicular to the second longitudinal axis (X6) and passing through the front face (642) of the plunger (64), and
- when the spool is in the advanced position, the second edge plane (P6) and the second parallel plane (π6) are separated by a distance (d6) less than or equal to 1 mm along this axis.

14. The quick coupling according to one of claims 3 and 13, **characterized in that**, in the coupled configuration of the quick coupling (2),
- the plunger (64) holds the shutter (46) in the retracted position;
- the pressurised fluid is free to flow (E) between the first and second longitudinal cavities (V42, V62); and
- the distal end (424) of the male tubular body (42) and a front face (662) of the spool (66) are spaced apart along the insertion axis (X2) by a non-zero distance (d46).

15. The quick coupling according to any of the preceding claims, **characterized in that** the first seal (48) and the second seal (68) are identical.

16. The quick coupling according to any of the preceding claims, **characterized in that**
- the female element (6) comprises at least two bearing surfaces (S624A, S624B) centred on the second longitudinal axis (X6);
- the bearing surfaces are configured to guide the male element (4) during insertion; and
- the bearing surfaces have a common guide diameter (cp624) and are offset along the second longitudinal axis by a distance (d624) greater than or equal to one-fifth of the common guide diameter.

17. An assembly (1) for connecting a mobile connection plate (10) to at least one fixed connection plate (8), in particular for connecting hydraulic circuits, **characterized in that**
- the connection assembly comprises at least one quick coupling (2) according to one of the preceding claims;
- the male element (4) of the quick coupling and the female element (6) of the quick coupling are each mounted on one of the movable and fixed plates, which has a pipe (12, 16) running through it that is fluidly connected to the first or second longitudinal cavity (V42, V62) of the coupling element; and
- a first plate (8; 10), of the movable plate and the fixed plate, is equipped with a clamp (84; 10A) for retaining the male or female element mounted on this first plate, this retaining clamp allowing a movement of the male or female element with respect to the first plate, in a plane normal to the first or second longitudinal axis (X4; X6) of the male or female element mounted on this first plate.
